(19) **Europäisches Patentamt European Patent Office Office européen des brevets**

(11) **EP 4 707 918 A1**

(12) **EUROPEAN PATENT APPLICATION**
published in accordance with Art. 153(4) EPC

(43) Date of publication:
**11.03.2026 Bulletin 2026/11**

(21) Application number: **24813807.5**

(22) Date of filing: **12.03.2024**

(51) International Patent Classification (IPC):
**G03B 21/20** (2006.01)     **G03B 21/00** (2006.01)

(52) Cooperative Patent Classification (CPC):
**G02B 26/00; G02B 27/01; G02B 27/28; G02B 27/48; G03B 21/00; G03B 21/20; H04N 9/31**

(86) International application number:
**PCT/CN2024/081141**

(87) International publication number:
**WO 2024/244601 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.05.2023 CN 202310647208**

(71) Applicant: **Huawei Technologies Co., Ltd. Shenzhen, Guangdong 518129 (CN)**

(72) Inventors:
• **QIN, Siyi**
  **Shenzhen, Guangdong 518129 (CN)**
• **SHI, Guangyuan**
  **Shenzhen, Guangdong 518129 (CN)**

(74) Representative: **Isarpatent Patent- und Rechtsanwälte Partg mbB Friedrichstraße 31 80801 München (DE)**

(54) **LIGHT SOURCE, PROJECTION SYSTEM, PROJECTION METHOD, AND RELATED APPARATUS**

(57)     A light source, a projection system, a projection method, and a related apparatus are provided, to effectively implement speckle suppression and reduce a speckle contrast. The light source includes a first blue light source (101) configured to emit first blue laser light (111), a second blue light source (102) configured to emit second blue laser light (112), a beam splitting module (103), and a phosphor (104). The beam splitting module (103) splits the second blue laser light (112) to obtain first sub-laser light (113) and second sub-laser light (114). A wavelength and a polarization of the first sub-laser light (113) are different from those of the first blue light source (101), to suppress a speckle of blue laser light. The second sub-laser light (114) is used to excite the phosphor (104) to obtain fluorescence (115). The projection system performs projection imaging based on the first sub-laser light (113), the first blue laser light (111), and the fluorescence (115).

FIG. 1

## Description

This application claims priority to Chinese Patent Application No. CN202310647208.1, filed with the China National Intellectual Property Administration on May 31, 2023, and entitled "LIGHT SOURCE, PROJECTION SYSTEM, PROJECTION METHOD, AND RELATED APPARATUS", which is incorporated herein by reference in its entirety.

## TECHNICAL FIELD

This application relates to the field of optical communication technologies, and in particular, to a light source, a projection system, a projection method, and a related apparatus.

## BACKGROUND

As society fully enters a multimedia information era, a type of information transits from a single digital text to a multimedia form mainly including an image and a sound. A projection system can implement display in a multimedia form.

A light source of the projection system may be laser light. The laser light is featured in low energy consumption, a small size, a long service life, and environmental protection. The projection system includes a blue laser source, a red laser source, a green laser source, an excitation light source, a phosphor mechanism, and a synthesis mechanism. Excitation light emitted by the excitation light source excites the phosphor mechanism to obtain fluorescence. The synthesis mechanism synthesizes blue laser light from the blue laser source, green laser light from the green laser source, red laser light from the red laser source, and the fluorescence from the phosphor mechanism to obtain compound light. The compound light is used as the light source of the projection system. The compound light can suppress image noise caused by a laser speckle.

A wavelength of the excitation light emitted by the excitation light source is shorter than a wavelength of the fluorescence. Therefore, if the fluorescence is blue fluorescence, the excitation light is ultraviolet light. The ultraviolet light excites the phosphor mechanism to generate blue fluorescence. The blue fluorescence does not cause interference, to suppress a speckle of the blue laser light. However, an excitation color gamut of the phosphor mechanism excited by the ultraviolet light is narrow, and the ultraviolet light may cause damage to human eyes.

## SUMMARY

Embodiments of this application provide a light source, a projection system, a projection method, and a related apparatus, to effectively implement speckle suppression and reduce a speckle contrast.

A first aspect of embodiments of this application provides a light source. A first blue light source is configured to output first blue laser light. A second blue light source is configured to transmit second blue laser light to a beam splitting module. A wavelength of the first blue laser light is different from a wavelength of the second blue laser light, and a polarization of the first blue laser light is different from a polarization of the second blue laser light. The beam splitting module is configured to: split the second blue laser light to obtain first sub-laser light and second sub-laser light, and output the first sub-laser light and transmit the second sub-laser light to a phosphor. The phosphor is configured to: obtain fluorescence under excitation of the second sub-laser light, and output the fluorescence. The light source is configured to output a projection light beam. The projection light beam includes the first blue laser light, the first sub-laser light, and the fluorescence. An example in which the polarization of the first blue laser light is different from the polarization of the second blue laser light is as follows: Both the first blue laser light and the second blue laser light are linearly polarized light with different polarizations; or the first blue laser light and the second blue laser light are two of linearly polarized light, left-handed circularly polarized light, right-handed circularly polarized light, or elliptically polarized light. The light source is configured to transmit the projection light beam to an imaging engine, and the imaging engine is configured to image the projection light beam.

According to the light source shown in this aspect, because the polarization of the first blue laser light is different from the polarization of the second blue laser light, and the wavelength of the first blue laser light is different from the wavelength of the second blue laser light, interference between the first blue laser light and the first sub-laser light does not occur. This effectively reduces interference between the first blue laser light and the first sub-laser light, reduces a speckle contrast, and effectively implements speckle suppression.

Based on the first aspect, in an optional implementation, the light source includes N beams of blue laser light with different wavelengths and different polarizations, and N is any integer not less than 2. The speckle contrast is negatively correlated with a value of N. In other words, a larger value of N indicates a lower speckle contrast; and a smaller value of N indicates a higher speckle contrast.

Based on the first aspect, in an optional implementation, the light source further includes a controller. The controller is separately connected to the first blue light source and the second blue light source, and the controller is configured to transmit a first light emitting signal to the first blue light source and a second light emitting signal to the second blue light source. The first light emitting signal and the second light emitting signal are jointly used to adjust a value relationship between an optical power of the first blue laser light and an optical power of the second blue laser light, and the value relationship between the optical power of the first blue laser light and the optical power of the second blue laser light is related to chromaticity coordinates of the projection light beam.

In this implementation, in the projection light beam, the chromaticity coordinates of the projection light beam change because of a different value relationship between the optical power of the first blue laser light and an optical power of the first sub-laser light. Therefore, the chromaticity coordinates of the projection light beam are adjusted, to adjust a color gamut size and a color temperature of the projection light beam.

Based on the first aspect, in an optional implementation, the controller is configured to: receive an adjustment instruction, and transmit the first light emitting signal to the first blue light source and the second light emitting signal to the second blue light source according to the adjustment instruction.

In this implementation, an adjustment instruction is correspondingly input to the controller based on different environments in which the light source is located or different requirements of users using the light source, so that the chromaticity coordinates of the projection light beam can dynamically match the environment in which the light source is located or the different requirements of the users using the light source.

Based on the first aspect, in an optional implementation, the polarization of the first blue laser light is perpendicular to the polarization of the second blue laser light.

In this implementation, when the polarization of the first blue laser light is perpendicular to the polarization of the second blue laser light, an optimal blue laser light speckle suppression effect can be implemented.

Based on the first aspect, in an optional implementation, the light source further includes a polarizing beam combiner module. In a process in which the first blue light source is configured to output the first blue laser light and the beam splitting module is configured to output the first sub-laser light, the first blue light source is configured to transmit the first blue laser light to the polarizing beam combiner module, and the beam splitting module is configured to transmit the first sub-laser light to the polarizing beam combiner module. The polarizing beam combiner module is configured to output the first blue laser light and the first sub-laser light respectively based on the polarization of the first blue laser light and a polarization of the first sub-laser light.

The wavelength of the first blue laser light and a wavelength of the first sub-laser light are both in a blue band. If the polarizing beam combiner module cannot accurately distinguish the first blue laser light from the first sub-laser light based on wavelengths, it cannot be ensured that the polarizing beam combiner module successfully transmits the first blue laser light and the first sub-laser light to the imaging engine. In this implementation, the polarizing beam combiner module transmits the first blue laser light to the imaging engine based on the polarization of the first blue laser light. The polarizing beam combiner module further transmits the first sub-laser light to the imaging engine based on the polarization of the first sub-laser light, to effectively ensure that the first blue laser light and the first sub-laser light are successfully transmitted to the imaging engine.

Based on the first aspect, in an optional implementation, the polarizing beam combiner module is configured to transparently transmit and output the first blue laser light based on the polarization of the first blue laser light, and the polarizing beam combiner module is configured to reflect and output the first sub-laser light based on the polarization of the first sub-laser light.

In this implementation, the polarizing beam combiner module can transparently transmit the first blue laser light to the imaging engine and reflect the first sub-laser light to the imaging engine, to effectively ensure that the first blue laser light and the first sub-laser light are successfully transmitted to the imaging engine.

Based on the first aspect, in an optional implementation, the polarizing beam combiner module is configured to reflect and output the first blue laser light based on the polarization of the first blue laser light, and the polarizing beam combiner module is configured to transparently transmit and output the first sub-laser light based on the polarization of the first sub-laser light.

In this implementation, the polarizing beam combiner module can reflect the first blue laser light to the imaging engine and transparently transmit the first sub-laser light to the imaging engine, to effectively ensure that the first blue laser light and the first sub-laser light are successfully transmitted to the imaging engine.

Based on the first aspect, in an optional implementation, in a process in which the phosphor is configured to obtain the fluorescence under excitation of the second sub-laser light, the phosphor is configured to obtain at least one of yellow fluorescence, red fluorescence, and green fluorescence under excitation of the second sub-laser light. For example, the phosphor includes yellow phosphor powder. The yellow phosphor powder is excited by the second sub-laser light to generate the yellow fluorescence. The yellow fluorescence is filtered by a light filter or the like to output the green fluorescence and the red fluorescence. For another example, the phosphor is a fluorescence material system, and the fluorescence material system is a mixture of red phosphor powder and green phosphor powder. In this case, the red phosphor powder is excited by the second sub-laser light to obtain the red fluorescence, and the green phosphor powder is excited by the second sub-laser light to obtain the green fluorescence. For another example, the phosphor includes two different regions: a red region and a green region. The red region is formed by red phosphor powder, and the green region is formed by green phosphor powder. The red region is excited by the second sub-laser light to generate the red fluorescence. The green region is excited by the second sub-laser light to generate the green fluorescence.

In this implementation, the fluorescence generated by the phosphor can effectively implement speckle suppression, and reduce a speckle contrast.

Based on the first aspect, in an optional implementation, the light source further includes a red light source, the red light source is configured to output red laser light, and the projection light beam further includes the red laser light.

In this implementation, a red projection light beam included in the projection light beam is the red laser light. This effectively improves a color gamut of the projection light beam.

Based on the first aspect, in an optional implementation, the light source further includes a red light source and a green light source, the red light source is configured to output red laser light, the green light source is configured to output green laser light, and the projection light beam further includes the green laser light and the red laser light.

In this implementation, a red projection light beam and a green projection light beam included in the projection light beam are respectively the red laser light and the green laser light. This effectively improves a color gamut of the projection light beam.

Based on the first aspect, in an optional implementation, the light source further includes a beam combiner module, and the beam combiner module is configured to combine the first blue laser light, the first sub-laser light, and the fluorescence to obtain the projection light beam.

In this implementation, a blue projection light beam in the projection light beam includes the first blue laser light and the first sub-laser light. Because the wavelengths of the first blue laser light and the first sub-laser light are different from each other, and the polarizations of the first blue laser light and the first sub-laser light are different from each other, a speckle contrast of the blue laser light is effectively reduced. The light source can be used in a three-chip imaging engine and a single-chip imaging engine. The three-chip imaging engine includes three different modulation modules. The single-chip imaging engine is an imaging engine that includes only one modulation module.

Based on the first aspect, in an optional implementation, the light source further includes a color filter wheel, the color filter wheel is configured to filter a blue projection light beam, a red projection light beam, and a green projection light beam out from the projection light beam in different time periods, and the blue projection light beam includes the first blue laser light and the first sub-laser light.

In this implementation, the light source can be used in a single-chip imaging engine.

A second aspect of this application provides a projection system. The projection system includes a light source and an imaging engine, the imaging engine includes a modulation module and a lens assembly, and the light source is as described in any implementation of the first aspect. The modulation module is configured to receive a projection light beam from the light source. The modulation module is configured to: modulate the projection light beam to obtain a modulated light beam, and transmit the modulated light beam to the lens assembly. The lens assembly is configured to image the modulated light beam.

For descriptions of beneficial effects of this aspect, refer to the descriptions shown in the first aspect. Details are not described again.

Based on the second aspect, in an optional implementation, the imaging engine further includes a color filter module and a convergence module. The modulation module includes a blue image modulation module, a red image modulation module, and a green image modulation module. The color filter module is configured to: split the projection light beam to obtain a blue projection light beam, a red projection light beam, and a green projection light beam; transmit the blue projection light beam to the blue image modulation module; transmit the red projection light beam to the red image modulation module; and transmit the green projection light beam to the green image modulation module. The blue image modulation module is configured to modulate the blue projection light beam to obtain a modulated blue light beam, the red image modulation module is configured to modulate the red projection light beam to obtain a modulated red light beam, and the green image modulation module is configured to modulate the green projection light beam to obtain a modulated green light beam. The convergence module is configured to: converge the modulated blue light beam, the modulated red light beam, and the modulated green light beam to obtain the modulated light beam, and transmit the modulated light beam to the lens assembly.

The blue projection light beam in the projection light beam includes the first blue laser light and the first sub-laser light shown in the first aspect. The red projection light beam in the light source is at least one of red laser light or red fluorescence. The green projection light beam in the light source is at least one of green laser light or green fluorescence.

Based on the second aspect, in an optional implementation, the imaging engine further includes a color filter wheel. The color filter wheel is configured to: split the projection light beam in a first time period to obtain a blue projection light beam, and transmit the blue projection light beam to the modulation module; split the projection light beam in a second time period to obtain a red projection light beam, and transmit the red projection light beam to the modulation module; and split the projection light beam in a third time period to obtain a green projection light beam, and transmit the green projection light beam to the modulation module, where any two of the first time period, the second time period, and the third time period are different.

A third aspect of embodiments of this application provides a projection light beam transmission method. The method is applied to a light source. The light source includes a first blue light source, a second blue light source, a beam splitting module, and a phosphor. The method includes: The first blue light source outputs first blue laser light. The second blue light source transmits second blue laser light to the beam splitting module. A wavelength of the first blue laser light is different from a wavelength of the second blue laser light, and a polarization of the first blue laser light is different from a polarization of the second blue laser light. The beam splitting module splits the second blue laser light to obtain first sub-laser light and second sub-laser light, and transmits the first sub-laser light to the modulation module and the second sub-laser light to the phosphor. The phosphor transmits fluorescence to a modulation module. The fluorescence is obtained by the phosphor under excitation of the second sub-laser light. The modulation module modulates a projection light beam to obtain a modulated light beam, and transmits the modulated light beam to a lens assembly. The projection light beam includes the first blue laser light, the first sub-laser light, and the fluorescence. The lens assembly images the modulated light beam.

For descriptions of beneficial effects of this aspect, refer to the descriptions shown in the first aspect. Details are not described again.

Based on the third aspect, in an optional implementation, the light source further includes a controller, and before the first blue light source transmits the first blue laser light to the modulation module and the second blue light source transmits the second blue laser light to the beam splitting module, the method further includes: The controller transmits a first light emitting signal to the first blue light source and a second light emitting signal to the second blue light source. The first light emitting signal and the second light emitting signal are jointly used to adjust a value relationship between an optical power of the first blue laser light and an optical power of the second blue laser light, and the value relationship between the optical power of the first blue laser light and the optical power of the second blue laser light is related to chromaticity coordinates of the projection light beam.

Based on the third aspect, in an optional implementation, that the controller transmits the first light emitting signal to the first blue light source and the controller transmits the second light emitting signal to the second blue light source includes: The controller receives an adjustment instruction, and transmits the first light emitting signal to the first blue light source and the second light emitting signal to the second blue light source according to the adjustment instruction.

Based on the third aspect, in an optional implementation, the light source further includes a polarizing beam combiner module, and that the first blue light source transmits the first blue laser light to the modulation module and the beam splitting module transmits the first sub-laser light to the modulation module includes: The first blue light source transmits the first blue laser light to the polarizing beam combiner module. The beam splitting module transmits the first sub-laser light to the polarizing beam combiner module. The polarizing beam combiner module separately transmits the first blue laser light and the first sub-laser light to the modulation module based on the polarization of the first blue laser light and a polarization of the first sub-laser light.

Based on the third aspect, in an optional implementation, the polarization of the first blue laser light is perpendicular to the polarization of the second blue laser light.

Based on the third aspect, in an optional implementation, the polarizing beam combiner module is configured to transparently transmit and output the first blue laser light based on the polarization of the first blue laser light, and the polarizing beam combiner module is configured to reflect and output the first sub-laser light based on the polarization of the first sub-laser light. Alternatively, the polarizing beam combiner module is configured to reflect and output the first blue laser light based on the polarization of the first blue laser light, and the polarizing beam combiner module is configured to transparently transmit and output the first sub-laser light based on the polarization of the first sub-laser light.

Based on the third aspect, in an optional implementation, the light source further includes a red light source, the red light source outputs red laser light, and the projection light beam further includes the red laser light.

Based on the third aspect, in an optional implementation, the light source further includes a red light source and a green light source, the red light source outputs red laser light, the green light source outputs green laser light, and the projection light beam further includes the green laser light and the red laser light.

Based on the third aspect, in an optional implementation, the light source further includes a beam combiner module, and the beam combiner module combines the first blue laser light, the first sub-laser light, and the fluorescence to obtain the projection light beam.

Based on the third aspect, in an optional implementation, the light source further includes a color filter wheel, the color filter wheel filters a blue projection light beam, the red laser light, and the green laser light out from the projection light beam in different time periods, and the blue projection light beam includes the first blue laser light and the first sub-laser light.

Based on the third aspect, in an optional implementation, the light source further includes a color filter wheel, the color filter wheel filters a blue projection light beam, a red projection light beam, and a green projection light beam out from the projection light beam to the imaging engine in different time periods, and the blue projection light beam includes the first blue laser light and the first sub-laser light. The red projection light beam is at least one of red laser light or red fluorescence. The green projection light beam is at least one of green laser light or green fluorescence.

A fourth aspect of embodiments of this application provides a projection method. The method is applied to a projection system, the projection system includes a light source and an imaging engine, the light source includes a first blue light source, a second blue light source, a beam splitting module, and a phosphor, the imaging engine includes a modulation module and a lens assembly, and the method includes: The first blue light source transmits first blue laser light to the imaging engine. The second blue light source transmits second blue laser light to the beam splitting module. A wavelength of the first blue laser light is different from a wavelength of the second blue laser light, and a polarization of the first blue laser light is different from a polarization of the second blue laser light. The beam splitting module splits the second blue laser light to obtain first sub-laser light and second sub-laser light, and transmits the first sub-laser light to the imaging engine and the second sub-laser light to the phosphor. The phosphor obtains fluorescence under excitation of the second sub-laser light, and the phosphor transmits the fluorescence to the imaging engine. The modulation module receives a projection light beam. The projection light beam includes the first blue laser light, the first sub-laser light, and the fluorescence. The modulation module modulates the projection light beam to obtain a modulated light beam, and transmits the modulated light beam to the lens assembly. The lens assembly images the modulated light beam.

For descriptions of beneficial effects of this aspect, refer to the descriptions shown in the first aspect. Details are not described again.

Based on the fourth aspect, in an optional implementation, the imaging engine further includes a color filter module and a convergence module. The modulation module includes a blue image modulation module, a red image modulation module, and a green image modulation module.

The color filter module splits the projection light beam to obtain a blue projection light beam, a red projection light beam, and a green projection light beam.

The color filter module transmits the blue projection light beam to the blue image modulation module.

The color filter module transmits the red projection light beam to the red image modulation module.

The color filter module transmits the green projection light beam to the green image modulation module.

That the modulation module modulates the projection light beam to obtain the modulated light beam includes:

The blue image modulation module modulates the blue projection light beam to obtain a modulated blue light beam.

The red image modulation module modulates the red projection light beam to obtain a modulated red light beam.

The green image modulation module modulates the green projection light beam to obtain a modulated green light beam.

The method further includes: The convergence module converges the modulated blue light beam, the modulated red light beam, and the modulated green light beam to obtain the modulated light beam, and transmits the modulated light beam to the lens assembly.

Based on the fourth aspect, in an optional implementation, the imaging engine further includes a color filter wheel. The color filter wheel splits the projection light beam in a first time period to obtain a blue projection light beam, and transmits the blue projection light beam to the modulation module. The color filter wheel splits the projection light beam in a second time period to obtain a red projection light beam, and transmits the red projection light beam to the modulation module. The color filter wheel splits the projection light beam in a third time period to obtain a green projection light beam, and transmits the green projection light beam to the modulation module. Any two of the first time period, the second time period, and the third time period are different.

A fifth aspect of embodiments of this application provides a head-up display system, including a light deflection module and the projection system according to any implementation of the second aspect. The projection system is configured to transmit a modulated light beam to the light deflection module. The light deflection module is configured to transmit an amplified modulated light beam to a windshield, and the modulated light beam forms a virtual image through the windshield.

For descriptions of beneficial effects of this aspect, refer to the descriptions shown in the first aspect. Details are not described again.

A sixth aspect of embodiments of this application provides a vehicle, including a vehicle body, a windshield, and a processor. The vehicle body is configured to fasten the windshield and the processor. The vehicle further includes the head-up display system according to the fifth aspect. The processor is configured to transmit vehicle driving-related information to an imaging engine. The imaging engine is configured to modulate the vehicle driving-related information to a projection light beam to obtain a modulated light beam. The vehicle driving-related information includes advanced driving assistance system information, vehicle fuel consumption, an engine speed, a temperature, vehicle speed information, steering wheel angle information, vehicle posture data, or the like of the vehicle.

A seventh aspect of embodiments of this application provides a projection headlight, including an imaging engine and the light source according to any implementation of the first aspect. The light source is configured to transmit a projection light beam to the imaging engine. The imaging engine is configured to modulate the projection light beam to obtain a modulated light beam. The modulated light beam is irradiated on a road surface to form a target light pattern, and the target light pattern indicates vehicle driving-related information.

An eighth aspect of embodiments of this application provides a vehicle, including a vehicle body, a windshield, and a processor. The vehicle body is configured to fasten the windshield and the processor. The vehicle further includes the projection headlight according to the seventh aspect. The processor is configured to transmit vehicle driving-related information to an imaging engine. The imaging engine is configured to modulate the vehicle driving-related information to a projection light beam to obtain a modulated light beam.

A ninth aspect of embodiments of this application provides augmented reality AR glasses. The AR glasses include a frame, lenses, a modulation module, and the light source according to any one of claims 1 to 10. The frame is configured to fasten the lenses, the light source, and the modulation module. The light source is configured to transmit a projection light beam to the modulation module. The modulation module is configured to: modulate the projection light beam to obtain a modulated light beam, and transmit the modulated light beam to the lenses. The lenses are configured to project the modulated light beam.

## BRIEF DESCRIPTION OF DRAWINGS

FIG. 1 is an example diagram of a structure of a first embodiment of a light source according to this application;

FIG. 2 is an example diagram of a first spectral distribution of a projection light beam according to this application;

FIG. 3 is an example diagram of first chromaticity coordinates of a projection light beam according to this application;

FIG. 4 is an example diagram of a structure of a second embodiment of a light source according to this application;

FIG. 5 is an example diagram of a second spectral distribution of a projection light beam according to this application;

FIG. 6 is an example diagram of second chromaticity coordinates of a projection light beam according to this application;

FIG. 7 is an example diagram of a structure of a third embodiment of a light source according to this application;

FIG. 8 is an example diagram of a third spectral distribution of a projection light beam according to this application;

FIG. 9 is an example diagram of a structure of a first embodiment of a projection system according to this application;

FIG. 10 is an example diagram of a structure of a fourth embodiment of a light source according to this application;

FIG. 11 is an example diagram of a structure of a second embodiment of a projection system according to this application;

FIG. 12 is an example diagram of a structure of a second embodiment of a projection system according to this application;

FIG. 13 is an example diagram of a structure of an embodiment of a head-up display system according to this application;

FIG. 14 is an example diagram of a structure of an embodiment of a projection headlight according to this application;

FIG. 15 is a step flowchart of a first embodiment of a projection light beam transmission method according to this application;

FIG. 16A and FIG. 16B are a step flowchart of a second embodiment of a projection light beam transmission method according to this application;

FIG. 17 is a step flowchart of a third embodiment of a projection light beam transmission method according to this application;

FIG. 18 is a step flowchart of a fourth embodiment of a projection light beam transmission method according to this application;

FIG. 19A and FIG. 19B are a step flowchart of a first embodiment of a projection method according to this application; and

FIG. 20 is a functional block diagram of an embodiment of a vehicle according to this application.

## DESCRIPTION OF EMBODIMENTS

The following clearly and completely describes the technical solutions in embodiments of this application with reference to the accompanying drawings in embodiments of this application. It is clear that the described embodiments are merely a part but not all of embodiments of this application. All other embodiments obtained by a person skilled in the art based on embodiments of this application without creative efforts shall fall within the protection scope of this application.

An embodiment of this application provides a projection system. The projection system includes a light source and an imaging engine. The light source transmits a projection light beam to the imaging engine, and the imaging engine can modulate the projection light beam to output a modulated light beam. The modulated light beam emitted by the projection system can be imaged, and human eyes can view an image formed by the modulated light beam emitted by the projection system. The light source shown in this embodiment can implement speckle suppression, and reduce a speckle contrast. The projection system in this embodiment may be used in a portable display device, a home theater, a conference presentation, a movie projection, outdoor display, and the like. This is not specifically limited.

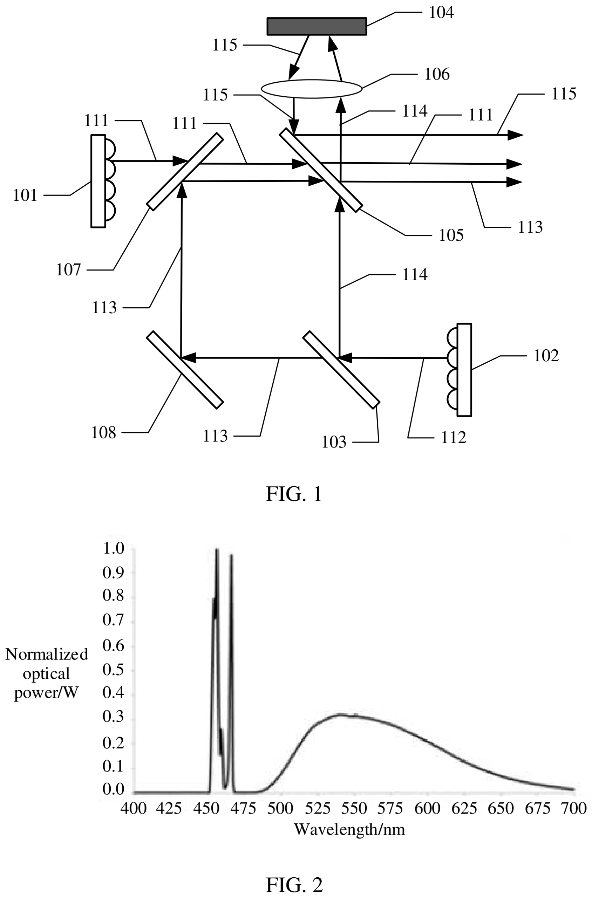

FIG. 1 is an example diagram of a structure of a first embodiment of a light source according to this application. The light source in this embodiment includes a first blue light source 101, a second blue light source 102, a beam splitting module 103, and a phosphor 104.

The first blue light source 101 emits one or more beams of first blue laser light 111. Specifically, the first blue light source 101 may be a single laser or a laser array. The laser array includes a plurality of lasers arranged in an array. The laser may be a laser diode (laser diode, LD), a vertical cavity surface-emitting laser (vertical cavity surface-emitting laser, VCSEL), a Fabry-Perot laser, or the like. A quantity of lasers included in the first blue light source 101, types of the lasers, and an arrangement form of the lasers are not limited in embodiments. The quantity of lasers included in the first blue light source 101 is positively correlated with an optical power and brightness of a projection light beam output by the light source. In this embodiment, an example in which the first blue light source 101 emits one beam of first blue laser light 111 is used. A quantity of beams of first blue laser light 111 emitted by the first blue light source 101 is not limited in embodiments. The second blue light source 102 emits one or more beams of second blue laser light 112. A quantity of beams of second blue laser light 112 emitted by the second blue light source 102 is not limited in embodiments. For descriptions of the second blue light source 102 in this embodiment, refer to the descriptions of the first blue light source 101. Details are not described again. In this embodiment, an example in which the first blue light source 101 and the second blue light source 102 are two laser sources located at different positions is used. This is not limited. In another example, the first blue light source 101 and the second blue light source 102 may be different lasers included in a same laser array.

To implement speckle suppression of blue laser light, the first blue laser light 111 and the second blue laser light 112 satisfy two conditions. A condition 1 is that a wavelength of the first blue laser light 111 is different from a wavelength of the second blue laser light 112. A condition 2 is that a polarization of the first blue laser light 111 is different from a polarization of the second blue laser light 112. Specifically, the blue laser light is laser light whose wavelength ranges from 400 nanometers (nm) to 480 nm. It may be understood that the wavelength of the first blue laser light 111 and the wavelength of the second blue laser light 112 in this embodiment are any two different wavelengths in 400 nm to 480 nm. In this embodiment, an example in which the wavelength of the first blue laser light 111 is 465 nm and the wavelength of the second blue laser light 112 is 455 nm is used. For example, both the first blue laser light 111 and the second blue laser light 112 are linearly polarized light, and the polarization of the first blue laser light 111 is perpendicular to the polarization of the second blue laser light 112. Specifically, the first blue laser light 111 is P-polarized light, and the second blue laser light 112 is in an S-polarized state. An electric vector of the first blue laser light 111 is parallel to a first incidence plane, and the first incidence plane is a plane on which normal lines of out-light surfaces of the first blue laser light 111 and the first blue light source 101 are located. An electric vector of the second blue laser light 112 is perpendicular to a second incidence plane, and the second incidence plane is a plane on which normal lines of out-light surfaces of the second blue laser light 112 and the second blue light source 102 are located. For another example, the first blue laser light 111 and the second blue laser light 112 are two of linearly polarized light, left-handed circularly polarized light, right-handed circularly polarized light, or elliptically polarized light. The descriptions of the first blue laser light 111 and the second blue laser light 112 in this embodiment are optional examples, and are not limited, provided that the polarization of the first blue laser light 111 is different from the polarization of the second blue laser light 112, and the wavelength of the first blue laser light 111 is different from the wavelength of the second blue laser light 112. It should be noted that, in this embodiment, the first blue light source 101 and the second blue light source 102 are adjusted to ensure that the polarization of the first blue laser light 111 is different from the polarization of the second blue laser light 112. In another example, a polarization processing module configured to change a polarization may be disposed on an optical path from which the first blue laser light 111 and/or the second blue laser light 112 are/is emitted, to ensure that the polarization of the first blue laser light 111 is different from the polarization of the second blue laser light 112. The polarization processing module may be a polarization converter, a polarizer, a polarizing beam splitter, a wave plate, or the like. This is not specifically limited.

The beam splitting module 103 is located on a transmission optical path of the second blue laser light 112 emitted from the second blue light source 102. In this case, the second blue laser light 112 emitted from the second blue light source 102 is transmitted to the beam splitting module 103. The beam splitting module 103 splits the second blue laser light 112 to obtain first sub-laser light 113 and second sub-laser light 114. The beam splitting module 103 may be a beam splitter, a beam splitting plate, a beam splitting prism, a beam splitting film, or the like. A specific type is not limited. In this embodiment, an example in which the beam splitting module 103 is a beam splitting plate is used for description. The beam splitting module 103 splits the second blue laser light 112 based on an optical power. For example, the beam splitting module 103 splits the second blue laser light 112 into the first sub-laser light 113 and the second sub-laser light 114 based on a preset split ratio. The split ratio may be 20%:80%. Specifically, the beam splitting module 103 uses 20% of the optical power of the second blue laser light 112 as the first sub-laser light 113, and the first sub-laser light 113 is transparently transmitted from the beam splitting module 103. The beam splitting module 103 uses 80% of the optical power of the second blue laser light 112 as the second sub-laser light 114, and the second sub-laser light 114 is reflected from the beam splitting module. It may be understood that beam splitting of the beam splitting module 103 does not change a wavelength and a polarization of laser light. In this case, wavelengths and polarizations of the first sub-laser light 113 and the second sub-laser light 114 are the same as those of the second blue laser light 112. The split ratio is not limited in embodiments. For example, higher brightness of blue light included in the projection light beam emitted by a projection system indicates a higher proportion of the first sub-laser light 113 in the second blue laser light 112.

The second sub-laser light 114 reflected from the beam splitting module 103 is transmitted to the phosphor 104. Optionally, a beam combiner module 105 is included between the phosphor 104 and the beam splitting module 103. The beam combiner module 105 may be a color-separation mirror, a dichroic mirror, a dichroic reflector, a prism, or the like. A specific type of the beam combiner module 105 is not limited in embodiments. It may be understood that the beam combiner module 105 is located on a transmission optical path of the second sub-laser light 114 reflected from the beam splitting module 103. The second sub-laser light 114 is transparently transmitted from the beam combiner module 105, and is transmitted to the phosphor 104. It may be understood that the phosphor 104 is located on a transmission optical path of the second sub-laser light 114 transparently transmitted from the beam combiner module 105.

To enable the projection system to project a color image, the projection light beam emitted by the light source includes a red projection light beam, a green projection light beam, and a blue projection light beam. The phosphor 104 obtains fluorescence under excitation of the second sub-laser light 114. The fluorescence includes red fluorescence used as the red projection light beam and green fluorescence used as the green projection light beam. Optionally, a lens group 106 is included between the phosphor 104 and the beam combiner module 105. The lens group 106 includes one or more lenses. A quantity of lenses included in the lens group 106 is not limited in embodiments. The lens group 106 focuses the second sub-laser light 114 on a surface of the phosphor 104. The phosphor 104 includes a fluorescent surface and a reflective surface. The fluorescent surface faces the lens group 106, so that the second sub-laser light 114 emitted from the lens group 106 is focused on the fluorescent surface. The fluorescent surface is formed by yellow phosphor powder. The fluorescent surface is excited by the second sub-laser light 114 to transmit fluorescence to the reflective surface. The fluorescence is specifically yellow fluorescence and is Lambertian light. The reflective surface reflects the fluorescence 115 to the lens group 106, and the lens group 106 collimates the fluorescence 115 to the beam combiner module 105. The lens group 106 can focus an optical power of the fluorescence 115 to the beam combiner module 105 as much as possible. A description of the phosphor 106 is not limited in embodiments. For example, the fluorescent surface of the phosphor 106 is a fluorescence material system, and the fluorescence material system is a mixture of red phosphor powder and green phosphor powder. In this case, the red phosphor powder is excited by the second sub-laser light 114 to obtain the red fluorescence, and the green phosphor powder is excited by the second sub-laser light 114 to obtain the green fluorescence. For another example, the fluorescent surface includes two different regions, one region is formed by the green phosphor powder, and the other region is formed by the red phosphor powder.

The blue projection light beam includes the first blue laser light 111 and the first sub-laser light 113. Specifically, the light source in this embodiment further includes a polarizing beam combiner module 107. For a description of the polarizing beam combiner module 107, refer to the description of the beam combiner module 105. Details are not described again. The first blue laser light 111 emitted from the first blue light source 101 is transmitted to the polarizing beam combiner module 107. The polarizing beam combiner module 107 transparently transmits the first blue laser light 111 to the beam combiner module 105. The first sub-laser light 113 transparently transmitted from the beam splitting module 103 is transmitted to the polarizing beam combiner module 107. Optionally, the light source further includes a reflector 108. The reflector 108 reflects the first sub-laser light 113 to the polarizing beam combiner module 107. The polarizing beam combiner module 107 reflects the first sub-laser light 113 to the beam combiner module 105. The beam combiner module 105 combines the first blue laser light 111, the first sub-laser light 113, and the fluorescence 115 to obtain the projection light beam. Specifically, the first blue laser light 111 and the first sub-laser light 113 are transparently transmitted from the beam combiner module 105, and the fluorescence 115 is reflected from the beam combiner module 105. The beam combiner module 105 may output the projection light beam in a beam combination manner like spectrum beam combination, polarization beam combination, or aperture beam combination. A specific beam combination manner is not limited. The projection light beam output by the light source is transmitted to the imaging engine, and the imaging engine modulates the projection light beam to implement imaging. Descriptions of optical paths of the first sub-laser light, the first blue laser light 111, and the fluorescence 115 that are emitted by the light source in this embodiment are an optional example, and are not limited, provided that the light source shown in this embodiment can successfully transmit the projection light beam including the first blue laser light 111, the first sub-laser light, and the fluorescence 115 to the imaging engine.

It may be understood that both the first blue laser light 111 and the first sub-laser light 113 received by the polarizing beam combiner module 107 are in a blue band. The polarizing beam combiner module 107 distinguishes the first blue laser light 111 from the first sub-laser light 113 based on polarizations, so that the first blue laser light 111 is transparently transmitted from the polarizing beam combiner module 107 and successfully transmitted to the beam combiner module 105. The first sub-laser light 113 is reflected from the polarizing beam combiner module 107 and successfully transmitted to the beam combiner module 105. Optionally, in another example, the first blue laser light 111 is reflected from the polarizing beam combiner module 107 and successfully transmitted to the beam combiner module 105. The first sub-laser light 113 is transparently transmitted from the polarizing beam combiner module 107 and successfully transmitted to the beam combiner module 105. The polarizing beam combiner module 107 can ensure, based on the polarizations, that both the first blue laser light 111 and the first sub-laser light 113 in the blue band are successfully transmitted to the beam combiner module 105, to ensure successful imaging of the imaging engine based on the projection light beam.

The projection light beam transmitted by the light source to the imaging engine in this embodiment includes the blue projection light beam (namely, the first blue laser light and the first sub-laser light), the red projection light beam (namely, the red fluorescence), and the green projection light beam (namely, the green fluorescence). For an output of the projection light beam, refer to FIG. 2. FIG. 2 is an example diagram of a first spectral distribution of a projection light beam according to this application. A horizontal coordinate of the example diagram of the spectrum distribution is a frequency band corresponding to the projection light beam, and a unit is nm. A vertical coordinate is a normalized optical power, and a unit is watt (W). The blue projection light beam output by the projection light beam has a band range of 400 nm to 480 nm, and has two different wavelengths, namely, a wavelength 465 nm of the first blue laser light 111 and a wavelength 455 nm of the first sub-laser light. That is, the blue projection light beam is narrowband laser light. The green projection light beam is the green fluorescence, has a band range of 500 nm to 600 nm, and is wide-spectrum fluorescence. The red projection light beam is the red fluorescence, has a band range of 600 nm to 660 nm, and is wide-spectrum fluorescence.

Separate first blue laser light or first sub-laser light generates a speckle. The speckle is bright spots and dark spots that are formed and randomly distributed in space when blue laser light is coherently superimposed during transmission when being reflected, scattered, or transparently transmitted from a rough surface. In this embodiment, the blue projection light beam includes the first blue laser light and the first sub-laser light with different wavelengths and different polarizations. This reduces coherent superposition of the first blue laser light and the first sub-laser light during transmission, and therefore no interference is generated. This effectively reduces interference between the first blue laser light and the first sub-laser light, reduces a speckle contrast, and effectively implements speckle suppression of the blue laser light. The speckle contrast indicates severity of a speckle on an image formed by the projection light beam. The speckle contrast C can be expressed as follows:

$$C = \frac{Std(I)}{Mean(I)}$$

Herein, Std(I) indicates a standard deviation of intensity on the image, and Mean(I) indicates an average value of the intensity on the image. A value of the speckle contrast C ranges from 0% to 100%. A larger speckle contrast indicates a more severe speckle. If the speckle contrast C is less than 5%, the speckle cannot be perceived by human eyes. It may be understood that, when the speckle contrast of the projection light beam in this embodiment is effectively reduced, definition of the image formed by the projection light beam is effectively improved.

In this embodiment, an example in which the blue projection light beam includes two beams of blue laser light (namely, the first blue laser light and the first sub-laser light) with different wavelengths and different polarizations is used. It should be noted that the projection light beam shown in this embodiment includes N beams of blue laser light with different wavelengths and different polarizations, and N is any integer not less than 2. In this case, after the N beams of blue laser light are combined, the speckle contrast is negatively correlated with a value of N. In other words, a larger value of N indicates a lower speckle contrast; and a smaller value of N indicates a higher speckle contrast.

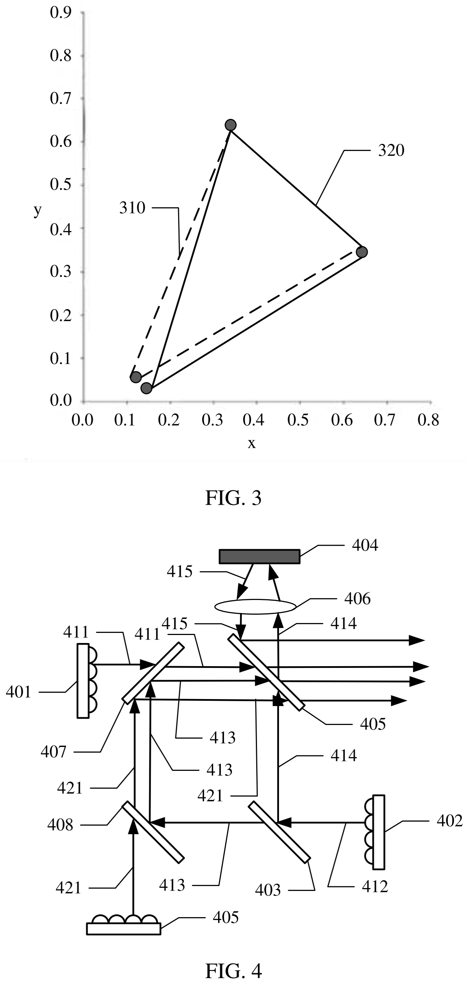

The light source in this embodiment can further dynamically adjust chromaticity coordinates of the projection light beam. FIG. 3 is an example diagram of first chromaticity coordinates of a projection light beam according to this application. The chromaticity coordinates (chromaticity coordinates) refer to coordinates of a color, and are also referred to as a color system. The chromaticity coordinates accurately indicate a color by using a two-dimensional coordinate system (a horizontal axis is x, and a vertical axis is y). A triangle 310 (a triangle represented by dashed lines) shown in FIG. 3 represents a color gamut that can be represented by a blue (first blue laser light) -red (red fluorescence) -green (green fluorescence) tri-color light source. Specifically, chromaticity coordinates of the first blue laser light are (0.135, 0.041), chromaticity coordinates of the green fluorescence are (0.339, 0.634), and chromaticity coordinates of the red fluorescence are (0.656, 0.344). A triangle 320 (a triangle represented by solid lines) represents a color gamut that can be represented by a blue (first sub-laser light) -red (red fluorescence) -green (green fluorescence) tri-color light source. Specifically, chromaticity coordinates of the first sub-laser light are (0.150, 0.023), chromaticity coordinates of the green fluorescence are (0.339, 0.634), and chromaticity coordinates of the red fluorescence are (0.656, 0.344). It should be noted that specific values of the chromaticity coordinates described in this embodiment are an optional example, and are not limited. It may be understood that, in the projection light beam, the chromaticity coordinates of the projection light beam change because of a different value relationship between an optical power of the first blue laser light and an optical power of the first sub-laser light. For example, if the optical power of the first blue laser light is greater than the optical power of the first sub-laser light in the projection light beam, the chromaticity coordinates of the projection light beam are closer to the triangle 310. If the optical power of the first sub-laser light is greater than the optical power of the first blue laser light, the chromaticity coordinates of the projection light beam are closer to the triangle 320. It may be understood that, the light source can adjust the chromaticity coordinates of the projection light beam by adjusting the value relationship between the optical power of the first blue laser light and the optical power of the first sub-laser light. In addition, different chromaticity coordinates of the projection light beam correspond to different color gamut coverage ratios and different color gamut area ratios. For example, when the optical power of the first sub-laser light is greater than the optical power of the first blue laser light, a color gamut coverage ratio of the projection light beam is 90.57% and a color gamut area ratio is 110.89% according to the high-definition digital video standard released by the International Telecommunication Union (ITU-R Recommendation BT.709), referred to as BT.709 for short. When the optical power of the first blue laser light is greater than the optical power of the first sub-laser light, the color gamut coverage ratio is 94.87% and the color gamut area ratio is 110.28% according to BT.709.

It may be understood that, a value relationship between the optical power of the first blue laser light and the optical power of the second blue laser light is adjusted, to adjust the value relationship between the optical power of the first blue laser light and the optical power of the first sub-laser light. In addition, the value relationship between the optical power of the first blue laser light and the optical power of the first sub-laser light is related to the chromaticity coordinates of the projection light beam. The following describes a process of adjusting the chromaticity coordinates of the projection light beam by the light source. The first blue light source 101 and the second blue light source 102 in this embodiment are further separately connected to a controller. The controller is a component of the light source, or the controller is a component of the imaging engine, or the controller is a component that is in the projection system and that is separate from the light source and the imaging engine. This is not specifically limited in embodiments. In this embodiment, an example in which the light source includes the controller is used. The controller may be one or more field-programmable gate arrays (field-programmable gate arrays, FPGAs), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller (microcontroller unit, MCU), a programmable controller (programmable logic device, PLD), an image processor, another integrated chip, any combination of the foregoing chips or processors, or the like. The controller transmits a first light emitting signal to the first blue light source and a second light emitting signal to the second blue light source. The first blue light source emits the first blue laser light based on the first light emitting signal, and the second blue light source emits the second blue laser light based on the second light emitting signal. The first light emitting signal and the second light emitting signal in this embodiment are jointly used to adjust the value relationship between the optical power of the first blue laser light and the optical power of the second blue laser light. For example, the controller controls a value of current of the first light emitting signal to adjust the value of the optical power of the first blue laser light. The value current of the first light emitting signal is positively correlated with the optical power of the first blue laser light. For a description of controlling, by the controller, the value of the optical power of the second blue laser light by using the second light emitting signal, refer to the description of controlling, by the controller, the value of the optical power of the first blue laser light by using the first light emitting signal. Details are not described again.

Optionally, the controller in this embodiment can receive an adjustment instruction, and the adjustment instruction instructs to adjust the chromaticity coordinates of the projection light beam. It may be understood that, the controller correspondingly adjusts a value relationship between the first blue laser light and the second blue laser light according to the adjustment instruction, to adjust the chromaticity coordinates of the projection light beam. For example, the light source includes a physical button like a toggle button, and a user enters the adjustment instruction by toggling the toggle button. For another example, the light source includes a touchscreen, and the touchscreen is configured to receive a touch event entered by the user. The controller correspondingly generates the adjustment instruction based on the touch event. For another example, the controller is connected to a sensor, and the sensor can detect an environment in which the light source is located, for example, detect brightness of the environment. The controller correspondingly generates the adjustment instruction based on the environment detected by the sensor. A manner of obtaining the adjustment instruction by the controller is not limited in embodiments.

The value relationship between the optical power of the first blue laser light and the optical power of the second blue laser light in this embodiment may be further used to adjust a color temperature of the projection light beam. For example, when the optical power of the second blue laser light remains unchanged, increasing the optical power of the first blue laser light can increase a proportion of an optical power of the blue laser light in the projection light beam. In this case, the color temperature of the projection light beam increases accordingly. For another example, if the optical power of the first blue laser light remains unchanged, increasing the optical power of the second blue laser light can increase a proportion of optical power of the fluorescence in the projection light beam. In this case, the color temperature of the projection light beam decreases accordingly. In a specific example, if the optical power of the second blue laser light is greater than the optical power of the first blue laser light, the optical power of the first sub-laser light accounts for about 30% of an optical power of the projection light beam, and the color temperature of the projection light beam is about 6500 Kelvins (K). If the optical power of the first blue laser light is increased, the optical power of the blue laser light accounts for about 38% of the optical power of the projection light beam, and the color temperature of the projection light beam is about 9000 K.

In the projection light beam emitted by the light source to the imaging engine shown in FIG. 1, only the blue projection light beam is laser light. However, in a projection light beam emitted by a light source to an imaging engine shown in FIG. 4, both a blue projection light beam and a red projection light beam are laser light, so that a color gamut of the projection light beam is increased. FIG. 4 is an example diagram of a structure of a second embodiment of a light source according to this application.

The light source in this embodiment includes a first blue light source 401, a second blue light source 402, a beam splitting module 403, a phosphor 404, and a red light source 405. The first blue light source 401 emits one or more beams of first blue laser light 411. The second blue light source 402 emits one or more beams of second blue laser light 412. For descriptions of the first blue light source 401, the second blue light source 402, the first blue laser light 411, and the second blue laser light 412 in this embodiment, refer to the descriptions corresponding to FIG. 1. Details are not described again. The beam splitting module 403 splits the second blue laser light 412 to obtain first sub-laser light 413 and second sub-laser light 414. For descriptions of the beam splitting module 403, the first sub-laser light 413, and the second sub-laser light 414, refer to the descriptions corresponding to FIG. 1. Details are not described again.

The red light source 405 in this embodiment emits red laser light 421. A wavelength of the red laser light 421 is within a band range of 640 nm to 650 nm. A quantity of wavelengths included in the red laser light 421 and a specific wavelength value are not limited in embodiments. For a description of the red light source 405, refer to the description of the first blue light source corresponding to FIG. 1. Details are not described again. The light source further includes a light filter 408. The light filter 408 is located on a transmission optical path of the red laser light 421 emitted from the red light source 405. The light filter 408 transparently transmits the red laser light 421 to a polarizing beam combiner module 407. For a description of the polarizing beam combiner module 407, refer to the description corresponding to FIG. 1. Details are not described again. The light filter 408 further receives the first sub-laser light 413 transparently transmitted from the beam splitting module 403, and reflects the first sub-laser light 413 to the polarizing beam combiner module 407. It may be understood that the polarizing beam combiner module 407 in this embodiment receives three beams of laser light, which are the first blue laser light 411, the first sub-laser light 413, and the red laser light 421 respectively. For a description of transmitting the first blue laser light 411 to the polarizing beam combiner module 407, refer to the description corresponding to FIG. 1. Details are not described again. The polarizing beam combiner module 407 transparently transmits the first blue laser light 411 to a beam combiner module 405. The polarizing beam combiner module 407 further reflects the first sub-laser light 413 and the red laser light 421 to the beam combiner module 405. For a description of the beam combiner module 405 in this embodiment, refer to the description corresponding to FIG. 1. Details are not described again.

The second sub-laser light 414 reflected from the beam splitting module 403 is transmitted to the phosphor 404. For a description of transmitting the second sub-laser light 414 to the phosphor 404, refer to the description corresponding to FIG. 1. Details are not described again. To enable a projection system to project a color image, the projection light beam emitted by the light source includes a red projection light beam, a green projection light beam, and a blue projection light beam. The blue projection light beam includes the first blue laser light 411 and the first sub-laser light 413. For a description of the blue projection light beam, refer to the description corresponding to FIG. 1. Details are not described again. The red projection light beam is the red laser light 421 emitted by the red light source 405. The green projection light beam is green fluorescence 415 obtained when the phosphor 404 is excited by the second sub-laser light 414. The phosphor 404 includes a fluorescent surface and a reflective surface. The fluorescent surface faces a lens group 406. For a description of the lens group 406, refer to the description corresponding to FIG. 1. Details are not described again. To obtain the green fluorescence, the fluorescent surface in this embodiment is formed by green phosphor powder. The fluorescent surface is excited by the second sub-laser light 414 to transmit the green fluorescence to the reflective surface. The reflective surface reflects the green fluorescence 415 to the lens group 406, and the lens group 406 collimates the green fluorescence 415 to the beam combiner module 405. In this embodiment, an example in which the phosphor 404 includes only the green phosphor powder is used. Because the phosphor 404 includes only the green phosphor powder, an optical power of the green fluorescence included in the projection light beam is effectively ensured. In another example, the phosphor 404 further includes red phosphor powder. The red phosphor powder is excited by the second sub-laser light 414 to generate red fluorescence. The red fluorescence and the red laser light 421 are jointly used as the red projection light beam, to effectively suppress a speckle of the red laser light.

The beam combiner module 405 combines the first blue laser light 411, the first sub-laser light 413, the red laser light 421, and the green fluorescence 415 to obtain the projection light beam. Specifically, the first blue laser light 411, the first sub-laser light 413, and the red laser light 421 are transparently transmitted from the beam combiner module 405, and the green fluorescence 415 is reflected from the beam combiner module 405. For a specific description of the beam combiner module 405, refer to the description corresponding to FIG. 1. Details are not described again.

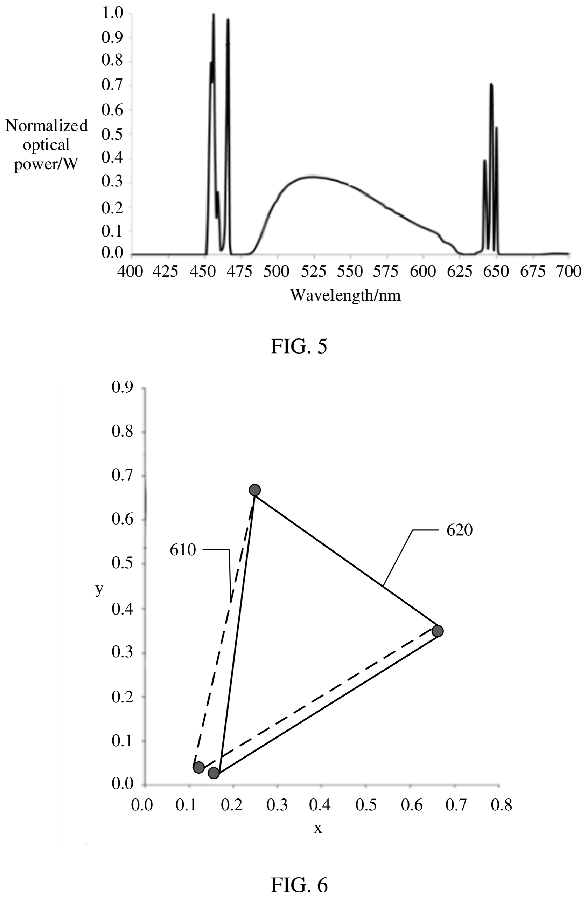

The projection light beam transmitted by the light source to the imaging engine in this embodiment includes the blue projection light beam (namely, the first blue laser light and the first sub-laser light), the red projection light beam (namely, the red laser light), and the green projection light beam (namely, the green fluorescence). It may be understood that the blue projection light beam and the red projection light beam of the projection light beam in this embodiment are both laser light. Compared with the embodiment shown in FIG. 1 in which only the blue projection light beam of the projection light beam is laser light, this embodiment effectively expands a color gamut. For an output of the projection light beam, refer to FIG. 5. FIG. 5 is an example diagram of a second spectral distribution of a projection light beam according to this application. For a description of a coordinate system of the example diagram of the spectrum distribution shown in FIG. 5, refer to FIG. 2. Details are not described again. In the example diagram of the spectrum distribution shown in FIG. 5, the blue projection light beam output by the projection light beam has a band range of 400 nm to 480 nm, and has two different wavelengths, namely, a wavelength 465 nm of the first blue laser light 111 and a wavelength 455 nm of the first sub-laser light. The blue laser light is narrowband laser light. The red projection light beam has a band range of 600 nm to 660 nm, and includes a segment of narrowband red laser light. Optionally, the red projection light beam may further include a segment of wide-spectrum fluorescence, and the wide-spectrum fluorescence is generated when the phosphor is excited by the second sub-laser light. The green projection light beam has a band range of 500 nm to 600 nm, and is wide-spectrum fluorescence. The projection light beam in this embodiment can effectively suppress a speckle. For a description of speckle suppression, refer to the description corresponding to FIG. 1. Details are not described again.

The light source in this embodiment can further dynamically adjust chromaticity coordinates of the projection light beam. FIG. 6 is an example diagram of second chromaticity coordinates of a projection light beam according to this application. A triangle 610 (a triangle represented by dashed lines) shown in FIG. 6 represents a color gamut that can be represented by a blue (first blue laser light) -red (red laser light and red fluorescence) -green (green fluorescence) tri-color light source. Specifically, chromaticity coordinates of the first blue laser light are (0.135, 0.041), chromaticity coordinates of the green fluorescence are (0.251, 0.68), and chromaticity coordinates of the red laser light and the red fluorescence are (0.684, 0.316). A triangle 620 (a triangle represented by solid lines) represents a color gamut that can be represented by a blue (first sub-laser light) -red (red laser light and red fluorescence) -green (green fluorescence) tri-color light source. Specifically, chromaticity coordinates of the first sub-laser light are (0.150, 0.023), chromaticity coordinates of the green fluorescence are (0.251, 0.68), and chromaticity coordinates of the red laser light are (0.684, 0.316). It should be noted that specific values of the chromaticity coordinates described in this embodiment are an optional example, and are not limited. It may be understood that, in the projection light beam, the chromaticity coordinates of the projection light beam change because of a different value relationship between an optical power of the first blue laser light and an optical power of the first sub-laser light. For example, if the optical power of the first blue laser light is greater than the optical power of the first sub-laser light in the projection light beam, the chromaticity coordinates of the projection light beam are closer to the triangle 610. If the optical power of the first sub-laser light is greater than the optical power of the first blue laser light, the chromaticity coordinates of the projection light beam are closer to the triangle 620. It may be understood that, the light source can adjust the chromaticity coordinates of the projection light beam by adjusting the value relationship between the optical power of the first blue laser light and the optical power of the first sub-laser light. Color gamut coverage ratios and color gamut area ratios corresponding to different chromaticity coordinates of the projection light beam are adjusted. For example, when the optical power of the first sub-laser light is greater than the optical power of the first blue laser light, the projection light beam has a color gamut coverage ratio of 96.92% and a color gamut area ratio of 104.9% according to BT.709. When the optical power of the first blue laser light is greater than the optical power of the first sub-laser light, the color gamut coverage ratio is 96.55% and the color gamut area ratio is 105.67% according to BT.709. For a description of adjusting the chromaticity coordinates of the projection light beam by adjusting the value relationship between the optical power of the first blue laser light and the optical power of the second blue laser light, refer to the description corresponding to FIG. 3. Details are not described again. The value relationship between the optical power of the first blue laser light and the optical power of the second blue laser light in this embodiment may be further used to adjust a color temperature of the projection light beam. For a specific description, refer to the embodiment corresponding to FIG. 1. Details are not described again.

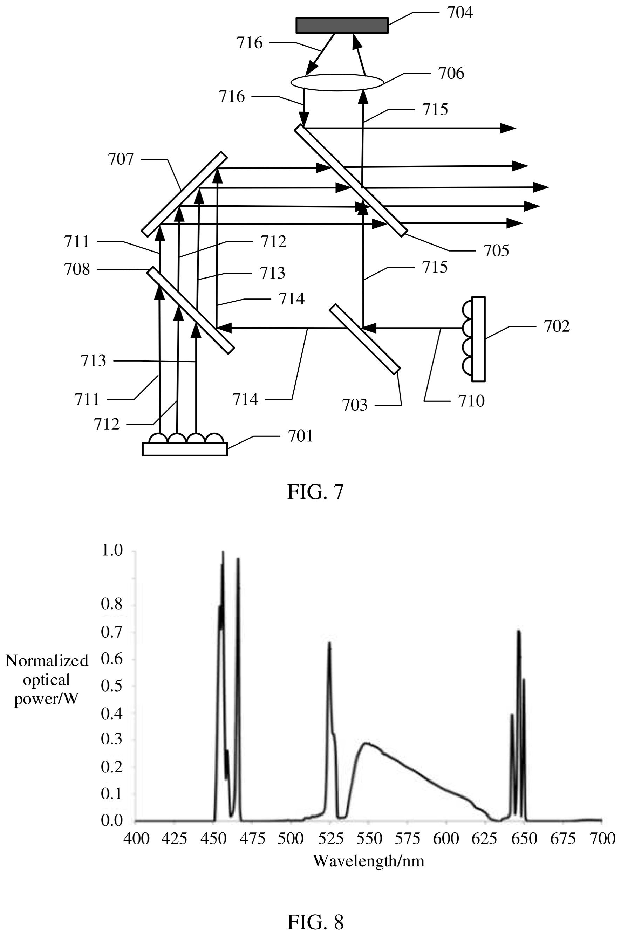

In the projection light beam emitted by the light source to the imaging engine shown in FIG. 1, only the blue projection light beam is laser light. However, in a projection light beam emitted by a light source to an imaging engine shown in FIG. 7, a blue projection light beam, a red projection light beam, and a green projection light beam are all laser light, so that a color gamut of the projection light beam is increased. FIG. 7 is an example diagram of a structure of a third embodiment of a light source according to this application.

The light source in this embodiment includes a tri-color laser 701, a second blue light source 702, a beam splitting module 703, and a phosphor 704. The tri-color laser 701 integrates a first blue light source that emits first blue laser light 711, a red light source that emits red laser light 712, and a green light source that emits green laser light 713. For a description of the first blue light source, refer to the description corresponding to FIG. 1. Details are not described again. For descriptions of structures of the second blue light source 702, the red light source, and the green light source, refer to the description of the first blue light source. Details are not described again. In this embodiment, an example in which the first blue light source, the red light source, and the green light source are integrated into a same tri-color laser is used. In this case, an example in which transmission directions of the first blue laser light 711, the red laser light 712, and the green laser light 713 in the light source are the same is used, and is not limited. In another example, the first blue light source, the red light source, and the green light source may be located at different positions in the light source, so that at least two of the first blue laser light 711, the red laser light 712, and the green laser light 713 have different transmission directions in the light source. The second blue light source 702 emits second blue laser light 710. For descriptions of the first blue laser light 711 and the second blue laser light 710 in this embodiment, refer to the descriptions corresponding to FIG. 1. Details are not described again. The beam splitting module 703 splits the second blue laser light 710 to obtain first sub-laser light 714 and second sub-laser light 715. For descriptions of the beam splitting module 703, the first sub-laser light 714, and the second sub-laser light 715, refer to the descriptions corresponding to FIG. 1. Details are not described again.

The light source further includes a light filter 708. The light filter 708 is located on transmission optical paths of the first blue laser light 711, the red laser light 712, and the green laser light 713 that are emitted from the tri-color laser 701. The light filter 708 transparently transmits the first blue laser light 711, the red laser light 712, and the green laser light 713 to a reflector 707. For a description of the reflector 707, refer to the description corresponding to FIG. 1. Details are not described again. The light filter 708 further receives the first sub-laser light 714 transparently transmitted from the beam splitting module 703, and reflects the first sub-laser light 714 to the reflector 707. It may be understood that the reflector 707 in this embodiment receives four beams of laser light, which are the first blue laser light 711, the first sub-laser light 714, the red laser light 712, and the green laser light 713 respectively. The reflector 707 reflects and transmits the first blue laser light 711, the first sub-laser light 714, the red laser light 712, and the green laser light 713 to a beam combiner module 705. For a description of the beam combiner module 705 in this embodiment, refer to the description corresponding to FIG. 1. Details are not described again.

The second sub-laser light 715 reflected from the beam splitting module 703 is transmitted to the phosphor 704. For a description of transmitting the second sub-laser light 715 to the phosphor 704, refer to the description corresponding to FIG. 1. Details are not described again. The phosphor 704 obtains fluorescence 716 under excitation of the second sub-laser light 715, and the fluorescence 716 includes green fluorescence and red fluorescence. For descriptions of the phosphor, the green fluorescence, and the red fluorescence, refer to the descriptions corresponding to FIG. 1. Details are not described again. A lens group 706 collimates the fluorescence 716 to the beam combiner module 705.

To enable a projection system to project a color image, the projection light beam emitted by the light source includes a red projection light beam, a green projection light beam, and a blue projection light beam. The blue projection light beam includes the first blue laser light 711 and the first sub-laser light 714. For a description of the blue projection light beam, refer to the description corresponding to FIG. 1. Details are not described again. The red projection light beam includes the red laser light 712 emitted by the red light source and the red fluorescence included in the fluorescence 716. The red fluorescence can effectively suppress a speckle of the red laser light. The green projection light beam includes the green laser light 713 emitted by the green light source and the green fluorescence included in the fluorescence 716. The green fluorescence can effectively suppress a speckle of the green laser light. The beam combiner module 705 combines the first blue laser light 711, the first sub-laser light 714, the red laser light 712, the green laser light 713, and the fluorescence 716 to obtain the projection light beam. Specifically, the first blue laser light 711, the first sub-laser light 714, the red laser light 712, and the green laser light 713 are transparently transmitted from the beam combiner module 705, and the fluorescence 716 is reflected from the beam combiner module 705. For a specific description of the beam combiner module 705, refer to the description corresponding to FIG. 1. Details are not described again.

The projection light beam transmitted by the light source to the imaging engine in this embodiment includes the blue projection light beam (namely, the first blue laser light and the first sub-laser light), the red projection light beam (namely, the red laser light and the red fluorescence), and the green projection light beam (namely, the green laser light and the green fluorescence). It may be understood that the blue projection light beam, the red projection light beam, and the green projection light beam of the projection light beam in this embodiment all include laser light. Compared with the embodiment shown in FIG. 1 in which only the blue projection light beam of the projection light beam is laser light, this embodiment effectively expands a color gamut. For an output of the projection light beam, refer to FIG. 8. FIG. 8 is an example diagram of a third spectral distribution of a projection light beam according to this application. For a description of a coordinate system of the example diagram of the spectrum distribution shown in FIG. 8, refer to FIG. 2. Details are not described again. In the example diagram of the spectrum distribution shown in FIG. 8, the blue projection light beam output by the projection light beam has a band range of 400 nm to 480 nm, and has two different wavelengths, namely, a wavelength 465 nm of the first blue laser light and a wavelength 455 nm of the first sub-laser light. The blue laser light is narrowband laser light. The red projection light beam has a band range of 600 nm to 660 nm, and includes a segment of wide-spectrum red fluorescence and a segment of narrowband red laser light. The green projection light beam has a band range of 500 nm to 600 nm, and includes a segment of wide-spectrum green fluorescence and a segment of narrowband green laser light. The projection light beam in this embodiment can effectively suppress a speckle. For a description of speckle suppression, refer to the description corresponding to FIG. 1. Details are not described again.

The light source in this embodiment can further dynamically adjust chromaticity coordinates of the projection light beam. For a specific description, refer to the description corresponding to FIG. 3. Details are not described again.

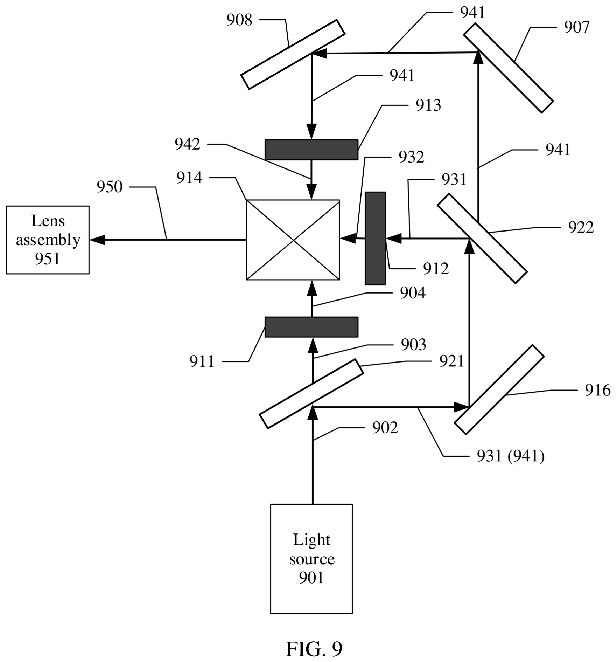

FIG. 9 is an example diagram of a structure of a first embodiment of a projection system according to this application. The projection system in this embodiment includes a light source 901 and an imaging engine. For a description of the light source 901, refer to any one of the embodiments in FIG. 1, FIG. 4, or FIG. 7. Details are not described again. The imaging engine includes three modulation modules: a red modulation module 911, a green modulation module 912, and a blue modulation module 913. The imaging engine further includes two color filter modules: a color filter module 921 and a color filter module 922. The color filter module 921 may be a color-separation mirror, a dichroic mirror, a dichroic reflector, a prism, or the like. This is not specifically limited. The imaging engine further includes a convergence module 914 and a lens assembly 951. The convergence module 914 may be an optical component used for light convergence, for example, a cross bidirectional prism.

Specifically, the color filter module 921 receives a projection light beam 902 from the light source 901. The color filter module 921 obtains a red projection light beam 903 from the projection light beam 921. The color filter module 921 transmits the red projection light beam 903 to the red modulation module 911. The red modulation module 911 modulates the red projection light beam 903 to transmit a modulated red light beam 904 to the convergence module 914. The color filter module 921 further obtains a green projection light beam 931 and a blue projection light beam 941 from the light beam. The color filter module 921 reflects the green projection light beam 931 and the blue projection light beam 941 to the color filter module 922 through a reflector 916. The color filter module 922 transmits the green projection light beam 931 to the green modulation module 912. The green modulation module 912 modulates the green projection light beam 931 to transmit a modulated green light beam 932 to the convergence module 914. The color filter module 922 further transmits the blue projection light beam 941 to the blue modulation module 913 sequentially through a reflector 907 and a reflector 908. The blue modulation module 913 modulates the blue projection light beam 941 to transmit a modulated blue light beam 942 to the convergence module 914. The convergence module 914 converges the modulated blue light beam 942, the modulated red light beam 904, and the modulated green light beam 932 to obtain a modulated light beam 950, and transmits the modulated light beam 950 to the lens assembly 951. It should be noted that the description of transmitting, by the imaging engine, the red projection light beam to the red modulation module 911, the green projection light beam to the green modulation module 912, and the blue projection light beam to the blue modulation module 913 in this embodiment is an optional example, and is not limited.

The red modulation module 911 is used as an example. The red modulation module 911 obtains a to-be-projected image source. The image source may be a video or a picture. Optionally, the red modulation module 911 in this embodiment may include an external interface. The red modulation module 911 receives an image source from any electronic device through the external interface. The external interface is connected to the electronic device. The external interface may be an external bus interface, a front-side bus, a display interface, a video display interface, a graphics interface, or the like. The video display interface may be a digital visual interface (digital visual interface, DVI), a high definition multimedia interface (high definition multimedia interface, HDMI), a video graphics array (video graphics array, VGA), or the like. Optionally, the red modulation module 911 in this embodiment may include an internal interface. The internal interface of the red modulation module 911 is connected to a controller. The red modulation module 911 receives an image source from the controller through the internal interface. The internal interface may be a bus, a local input/output (input/output, I/O) port bus, a hub interface bus, or the like. The red modulation module 911 modulates the red projection light beam from the light source 901 based on the image source, to obtain the modulated red light beam 904 corresponding to the image source. The red modulation module 911 may be a liquid crystal display (liquid crystal display, LCD), a digital micromirror device (digital micromirror device, DMD), a liquid crystal on silicon (liquid crystal on silicon, LCOS), or the like. For descriptions of the green modulation module 912 and the blue modulation module 913, refer to the description of the red modulation module 911. Details are not described again.

The lens assembly 951 receives the modulated light beam 950 and images the modulated light beam 950. The lens assembly 951 includes one or more lenses. An enlarged real image of the modulated light beam 950 is formed on the lens. The lens may be a convex lens or a concave lens. Optionally, the projection system in this embodiment may further include a projection screen. In this case, real images corresponding to the modulated light beam 950 emitted by the lens assembly 951 can be separately displayed on the projection screen.

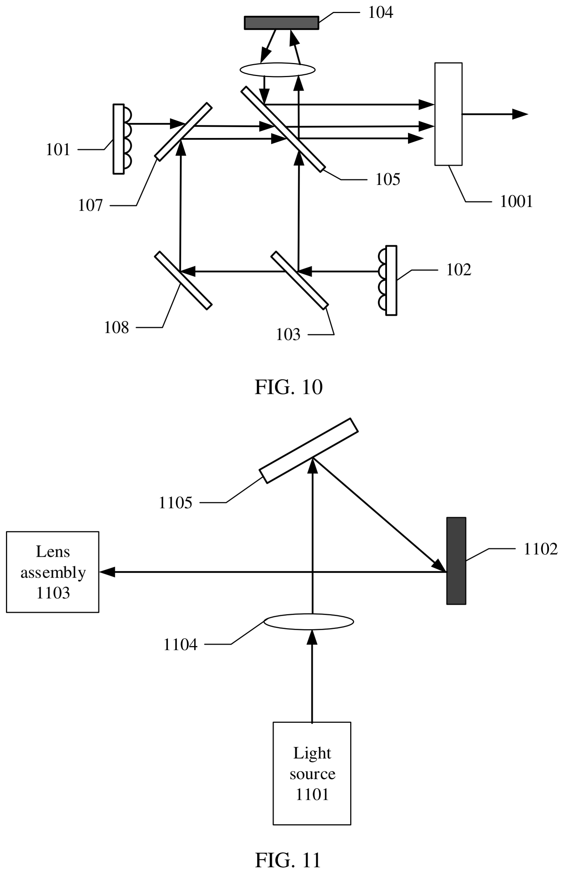

FIG. 9 shows an example in which the light source is used in a three-chip imaging engine. The three-chip imaging engine is an imaging engine that includes three modulation modules: the red modulation module 911, the green modulation module 912, and the blue modulation module 913. The light source shown in FIG. 10 is used in a single-chip imaging engine. The single-chip imaging engine is an imaging engine that includes only one modulation module. FIG. 10 is an example diagram of a structure of a fourth embodiment of a light source according to this application.

The light source in this embodiment includes a first blue light source 101, a second blue light source 102, a beam splitting module 103, and a phosphor 104. For a specific description, refer to the description corresponding to FIG. 1. Details are not described again. The light source in this embodiment further includes a color filter wheel 1001. The color filter wheel 1001 in this embodiment can rotate under driving of a controller. The color filter wheel 1001 is coated with blue, red, and green films. When the blue coating film is rotated to a transmission optical path of a projection light beam emitted from a beam combiner module 105, only a blue projection light beam can pass through the color filter wheel 1001 to be transmitted to an imaging engine. When the red coating film is rotated to the transmission optical path of the projection light beam emitted from the beam combiner module 105, only a red projection light beam can pass through the color filter wheel 1001 to be transmitted to the imaging engine. Similarly, when the green coating film is rotated to the transmission optical path of the projection light beam emitted from the beam combiner module 105, only a green projection light beam can pass through the color filter wheel 1001 to be transmitted to the imaging engine. It should be noted that, the light source may further include a red light source that emits red laser light. For a specific description, refer to the description corresponding to FIG. 4. The light source may further include a green light source that emits green laser light. For a specific description, refer to the description corresponding to FIG. 7. Details are not described again.

Based on the color filter wheel 1001 in this embodiment, the blue projection light beam can be transmitted to the imaging engine in a first time period, the green projection light beam can be transmitted to the imaging engine in a second time period, and the red projection light beam can be transmitted to the imaging engine in a third time period. On a time axis, any two of the first time period, the second time period, and the third time period are different. It may be understood that the blue projection light beam, the red projection light beam, and the green projection light beam are transmitted to the imaging engine at different time.

FIG. 11 is an example diagram of a structure of a second embodiment of a projection system according to this application. The projection system in this embodiment includes a light source 1101, a modulation module 1102, and a lens assembly 1103. For a description of a structure of the light source 1101, refer to the description corresponding to FIG. 10. Details are not described again. For descriptions of the modulation module 1102 and the lens assembly 1103, refer to the descriptions corresponding to FIG. 9. Details are not described again.

Specifically, the light source 1101 can emit a blue projection light beam, a green projection light beam, and a red projection light beam at different time. For a specific description, refer to the description corresponding to FIG. 10. Details are not described again. Optionally, an imaging engine further includes a lens group 1104 and a reflector 1105. The blue projection light beam emitted from the light source 1101 is collimated by the lens group 1104 and then converged to the reflector 1105. The reflector 1105 reflects the blue projection light beam to the modulation module 1102. The modulation module 1102 modulates the blue projection light beam to transmit a modulated blue light beam to the lens assembly 1103. For descriptions of transmitting the red projection light beam and the green projection light beam to the modulation module 1102, refer to the description of transmitting the blue projection light beam to the modulation module 1102. Details are not described again. It may be understood that, because the blue projection light beam, the green projection light beam, and the red projection light beam are transmitted to the imaging engine at different time, the modulation module 1102 can modulate the blue projection light beam, the green projection light beam, and the red projection light beam at different time, to obtain the modulated blue light beam, a modulated green light beam, and a modulated red light beam.

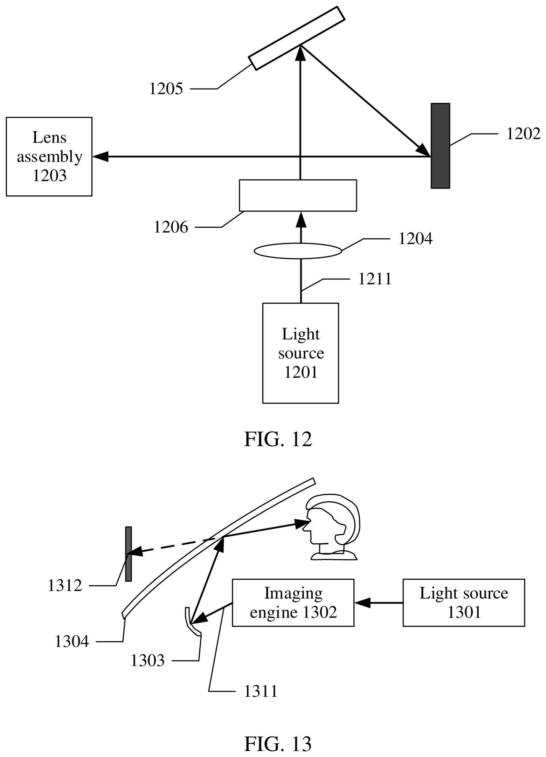

FIG. 12 is an example diagram of a structure of a second embodiment of a projection system according to this application. The projection system in this embodiment includes a light source 1201, a modulation module 1202, a color filter wheel 1206, and a lens assembly 1203. The light source 1201 can transmit a projection light beam 1211 to an imaging engine. The projection light beam 1211 is a combination of a blue projection light beam, a red projection light beam, and a green projection light beam. For a specific description, refer to the description corresponding to FIG. 1, FIG. 4, or FIG. 7. Details are not described again. For a description of the color filter wheel 1206, refer to the description corresponding to FIG. 10. Details are not described again.

Specifically, the projection light beam 1211 emitted by the light source 1201 is collimated by a lens group 1204 and then converged to the color filter wheel 1206. The color filter wheel 1206 can filter the projection light beam, to transmit a green projection light beam, a blue projection light beam, and a red projection light beam to a reflector 1205 at different time. The green projection light beam is used as an example. The reflector 1205 reflects the green projection light beam to the modulation module 1202. The modulation module 1202 modulates the green projection light beam to transmit a modulated green light beam to the lens assembly 1203. For descriptions of transmitting the red projection light beam and the blue projection light beam to the modulation module 1202, refer to the description of transmitting the green projection light beam to the modulation module 1202. Details are not described again. It may be understood that, because the blue projection light beam, the green projection light beam, and the red projection light beam are transmitted to the modulation module 1202 at different time, the modulation module 1202 can modulate the blue projection light beam, the green projection light beam, and the red projection light beam at different time, to obtain a modulated blue light beam, the modulated green light beam, and a modulated red light beam.

FIG. 13 is an example diagram of a structure of an embodiment of a head-up display system according to this application. The head-up display (head-up display, HUD) system in this embodiment includes a light source 1301, an imaging engine 1302, and a light deflection module. For descriptions of structures of the light source 1301 and the imaging engine 1302, refer to any one of the embodiments in FIG. 9, FIG. 11, or FIG. 12. Details are not described again. The HUD system projects vehicle-related information to a front field of view of a driver. The vehicle-related information may be instrument information (for example, a vehicle speed), navigation information, or the like. In this case, the driver can view the vehicle-related information in the front field of view, and does not need to look down to observe an instrument panel below a steering wheel or a central display screen. This can improve brake reaction time in an emergency, and enhance driving safety.

The light source 1101 in this embodiment transmits a projection light beam to the imaging engine 1302. The imaging engine 1302 can modulate vehicle-related information on the projection light beam to obtain a modulated light beam 1311. The light deflection module 1311 can transmit the modulated light beam to a front of a vehicle to form an enlarged virtual image 1312. The light deflection module in this embodiment includes a curved mirror 1303. The curved mirror 1303 transmits a light spot of the amplified modulated light beam 1311 to a windshield 1304 of the vehicle. The windshield 1304 reflects the modulated light beam 1311 to two eyes of the driver for imaging. In other words, a reverse extension line of an image formed in the two eyes of the driver forms the virtual image 1312 in the front of the vehicle. In this embodiment, an example in which the HUD system is used in the vehicle is used. In another example, the HUD system may be further used in a driving tool that needs to be driven by a driver, for example, a ship, an airplane, or a helicopter.

An embodiment further provides a vehicle. The vehicle includes the HUD system shown in FIG. 13 and a windshield. Certainly, the vehicle may further include another component, for example, a steering wheel, a processor, a memory, a wireless communication apparatus, and a sensor. This is not specifically limited in embodiments.

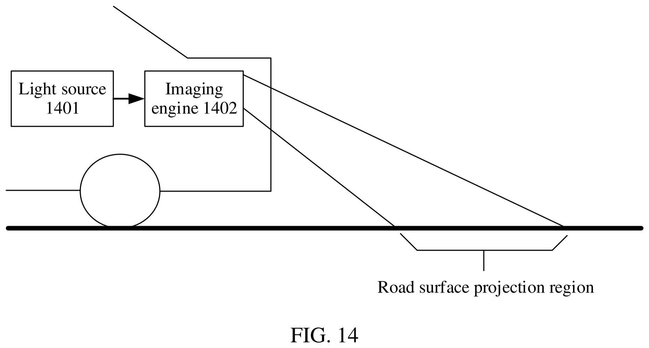

FIG. 14 is an example diagram of a structure of an embodiment of a projection headlight according to this application. The projection headlight includes a light source 1401 and an imaging engine 1402. For descriptions of the light source 1401 and the imaging engine 1402, refer to the foregoing embodiments. Details are not described again. The light source 1401 transmits a projection light beam to the imaging engine 1402, and the imaging engine 1402 modulates the projection light beam to output a modulated light beam. The modulated light beam emitted from the imaging engine 1402 can be imaged on a road surface on which a vehicle travels. Specifically, the modulated light beam displays a target light pattern in a road surface projection region on the road surface for imaging. The target light pattern formed by the modulated light beam may be a light carpet displayed in the road surface projection region. The light carpet notifies a driver of advanced driving assistance system (advanced driving assistance system, ADAS) information of the vehicle, main data (fuel consumption, an engine speed, a temperature, and the like) on an instrument panel of the vehicle, vehicle speed information, steering wheel angle information, vehicle posture data, or the like through a modulated image, color, light pattern, or the like. This is not specifically limited in embodiments. The modulated light beam that is emitted by the projection headlight in this embodiment and that is displayed in the target light pattern may alternatively be used to illuminate a road surface around the vehicle, to enhance driving safety or navigation efficiency.

The projection headlight in this embodiment is used for vehicle lighting and image projection, and may be a low beam or an adaptive high beam, to implement assisted autonomous driving of the vehicle. The vehicle may be an autonomous vehicle (autonomous vehicle; self-piloting automobile), also referred to as an unmanned vehicle. The vehicle may alternatively be a sedan, a truck, a motorcycle, a public vehicle, a lawn mower, an entertainment vehicle, a playground vehicle, a tram, a golf cart, a train, a handcart, or the like.

This embodiment provides augmented reality (augmented reality, AR) glasses. AR glasses integrate virtual information with the real world, extensively utilize a plurality of technical means such as multimedia, three-dimensional modeling, real-time tracking and registration, intelligent interaction, and sensing, and simulate virtual information such as a text, an image, a three-dimensional model, music, or a video generated by a computer and then apply simulated information to the real world. The two types of information complement each other, to implement "augmentation" of the real world. With diversification of AR products, it is more convenient for a user to use the AR products. The AR glasses include a frame, lenses, a light source, and a modulation module. For descriptions of the light source and the modulation module, refer to the foregoing embodiments. Details are not described again. The light source and the modulation module are fastened to the frame. A projection apparatus transmits a projection light beam to the modulation module, and the modulation module modulates the projection light beam to obtain a modulated light beam. The modulation module projects the modulated light beam to a side of the lenses facing eyes of a wearer, so that the lenses reflect, by using a reflection function, the modulated light beam to the eyes of the wearer.

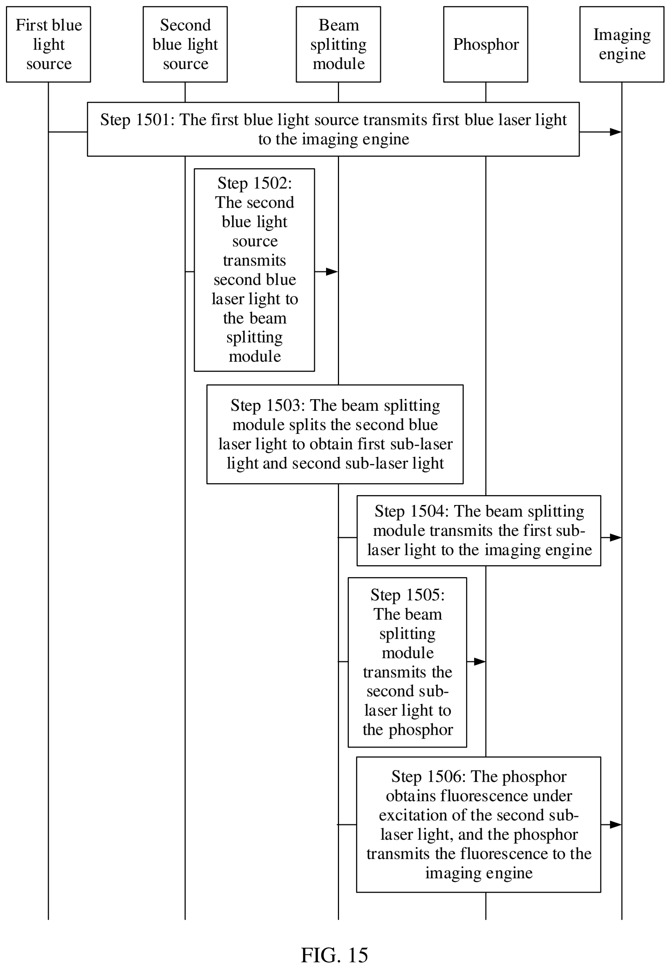

FIG. 15 is a step flowchart of a first embodiment of a projection light beam transmission method according to this application. The method in this embodiment is applied to the light source shown in FIG. 1. For a description of a structure of the light source, refer to the description corresponding to FIG. 1. Details are not described again.

Step 1501: A first blue light source transmits first blue laser light to an imaging engine.

Specifically, the first blue laser light is transmitted to the imaging engine through a polarizing beam combiner module based on a polarization of the first blue laser. For a description of the polarizing beam combiner module, refer to the description corresponding to FIG. 1. Details are not described again.

Step 1502: A second blue light source transmits second blue laser light to a beam splitting module.

A wavelength of the first blue laser light is different from a wavelength of the second blue laser light, and the polarization of the first blue laser light is different from a polarization of the second blue laser light.

Step 1503: The beam splitting module splits the second blue laser light to obtain first sub-laser light and second sub-laser light.

Step 1504: The beam splitting module transmits the first sub-laser light to the imaging engine.

Specifically, the first sub-laser light is transmitted to the imaging engine through the polarizing beam combiner module based on a polarization of the first sub-laser light.

Step 1505: The beam splitting module transmits the second sub-laser light to a phosphor.

Step 1506: The phosphor obtains fluorescence under excitation of the second sub-laser light, and the phosphor transmits the fluorescence to the imaging engine.

For descriptions of the structure of the light source in this embodiment, a specific process of performing the projection light beam transmission method by the light source, and beneficial effects, refer to the descriptions corresponding to FIG. 1. Details are not described again.

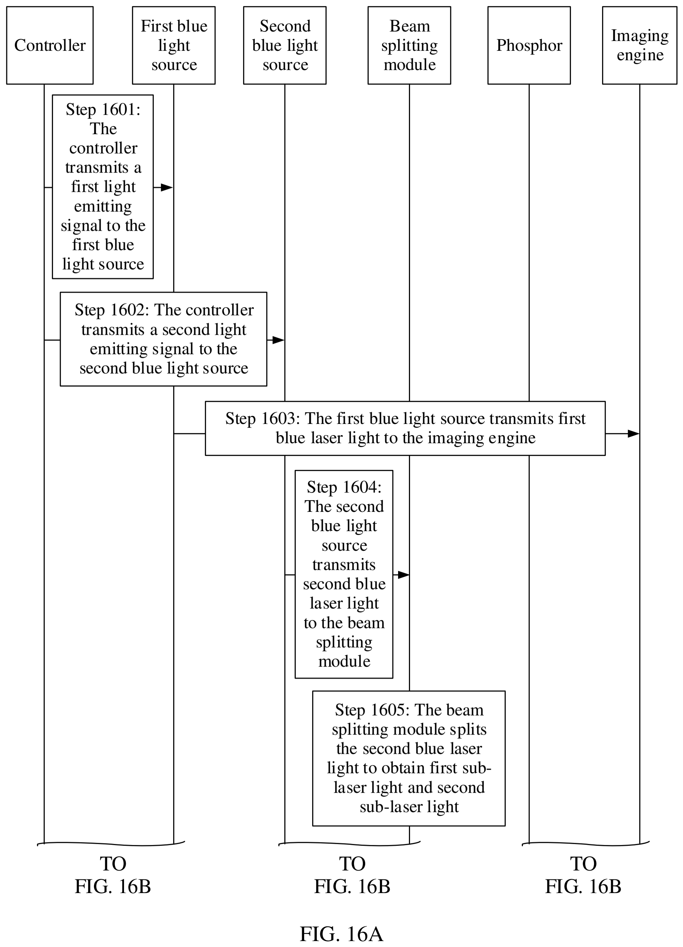

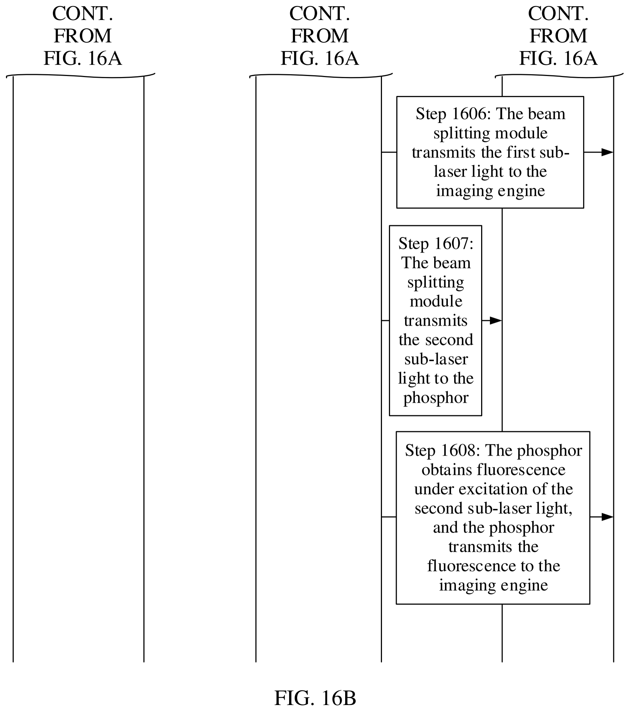

FIG. 16A and FIG. 16B are a step flowchart of a second embodiment of a projection light beam transmission method according to this application. The method in this embodiment is applied to the light source shown in FIG. 1. For a description of a structure of the light source, refer to the description corresponding to FIG. 1. Details are not described again.

Step 1601: A controller transmits a first light emitting signal to a first blue light source.

Step 1602: The controller transmits a second light emitting signal to a second blue light source.

The first light emitting signal and the second light emitting signal are jointly used to adjust a value relationship between an optical power of first blue laser light and an optical power of second blue laser light, and the value relationship between the optical power of the first blue laser light and the optical power of the second blue laser light is related to chromaticity coordinates of a projection light beam.

Step 1603: The first blue light source transmits the first blue laser light to an imaging engine.

Step 1604: The second blue light source transmits the second blue laser light to a beam splitting module.

In this embodiment, the first blue light source emits the first blue laser light based on the first light emitting signal, and the second blue light source emits the second blue laser light based on the second light emitting signal. The value relationship between the optical power of the first blue laser light and the optical power of the second blue laser light is a value relationship jointly indicated by the first light emitting signal and the second light emitting signal. For a description of sending the first light emitting signal and the second light emitting signal by the controller to adjust the chromaticity coordinates of the projection light beam, refer to the descriptions in FIG. 1 to FIG. 3. Details are not described again.

Step 1605: The beam splitting module splits the second blue laser light to obtain first sub-laser light and second sub-laser light.

Step 1606: The beam splitting module transmits the first sub-laser light to the imaging engine.

Step 1607: The beam splitting module transmits the second sub-laser light to a phosphor.

Step 1608: The phosphor obtains fluorescence under excitation of the second sub-laser light, and the phosphor transmits the fluorescence to the imaging engine.

For a description of an execution process of step 1605 to step 1608 in this embodiment, refer to the description of corresponding step 1503 to step 1506 in FIG. 15. Details are not described again.

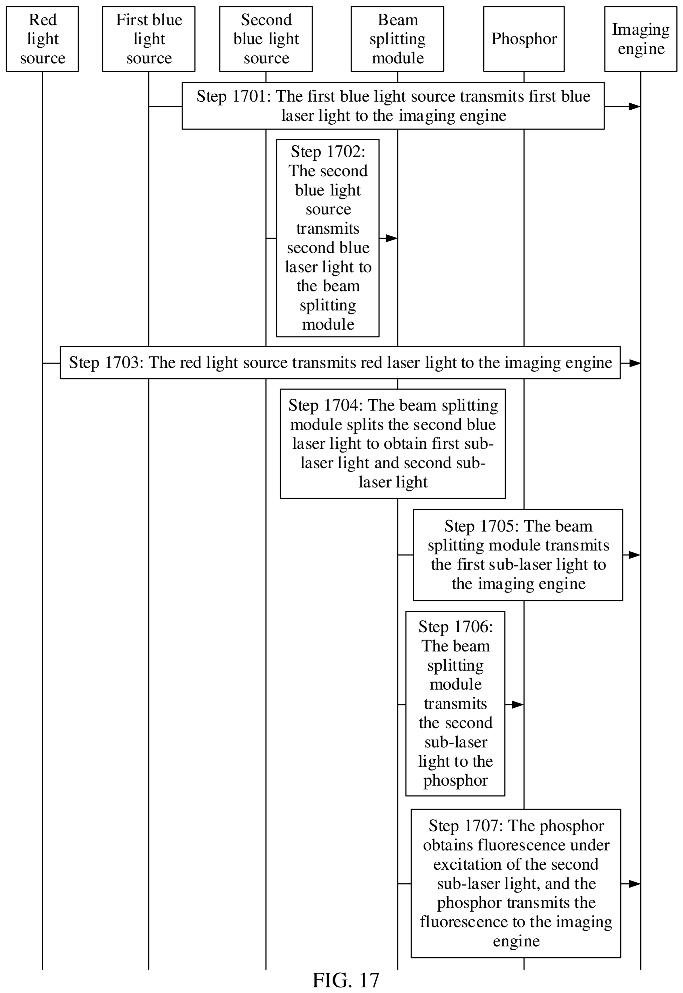

FIG. 17 is a step flowchart of a third embodiment of a projection light beam transmission method according to this application. The method in this embodiment is applied to the light source shown in FIG. 4. For a description of a structure of the light source, refer to the description corresponding to FIG. 4. Details are not described again.

Step 1701: A first blue light source transmits first blue laser light to an imaging engine.

Step 1702: A second blue light source transmits second blue laser light to a beam splitting module.

For a description of an execution process of step 1701 and step 1702 in this embodiment, refer to the description of corresponding step 1501 and step 1502 in FIG. 15. Details are not described again.

Step 1703: A red light source transmits red laser light to the imaging engine.

For a description of transmitting red laser light by the red light source to the imaging engine in this embodiment, refer to the description corresponding to FIG. 4. Details are not described again.

Step 1704: The beam splitting module splits the second blue laser light to obtain first sub-laser light and second sub-laser light.

Step 1705: The beam splitting module transmits the first sub-laser light to the imaging engine.

Step 1706: The beam splitting module transmits the second sub-laser light to a phosphor.

For a description of an execution process of step 1704 to step 1706 in this embodiment, refer to the description of the execution process of corresponding step 1503 to step 1505 in FIG. 15. Details are not described again.

Step 1707: The phosphor obtains fluorescence under excitation of the second sub-laser light, and the phosphor transmits the fluorescence to the imaging engine.

For a specific description of generating green fluorescence by the phosphor under excitation of the second sub-laser light in this embodiment, refer to the description corresponding to FIG. 4. Details are not described again.

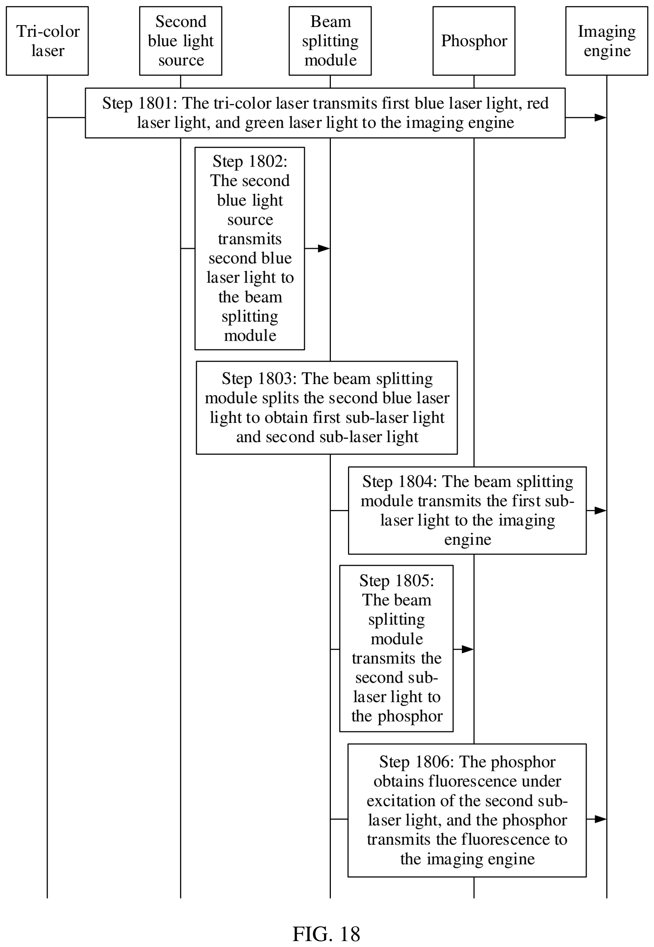

FIG. 18 is a step flowchart of a fourth embodiment of a projection light beam transmission method according to this application. The method in this embodiment is applied to the light source shown in FIG. 7. For a description of a structure of the light source, refer to the description corresponding to FIG. 7. Details are not described again.

Step 1801: A tri-color laser transmits first blue laser light, red laser light, and green laser light to an imaging engine.

For a description of an execution process of step 1701 in this embodiment, refer to the description corresponding to FIG. 7. Details are not described again.

Step 1802: A second blue light source transmits second blue laser light to a beam splitting module.

For a description of an execution process of step 1802 in this embodiment, refer to the description of corresponding step 1502 in FIG. 15. Details are not described again.

Step 1803: The beam splitting module splits the second blue laser light to obtain first sub-laser light and second sub-laser light.

Step 1804: The beam splitting module transmits the first sub-laser light to the imaging engine.

Step 1805: The beam splitting module transmits the second sub-laser light to a phosphor.

Step 1806: The phosphor obtains fluorescence under excitation of the second sub-laser light, and the phosphor transmits the fluorescence to the imaging engine.

For a description of an execution process of step 1803 to step 1806 in this embodiment, refer to the description of the execution process of corresponding step 1503 to step 1506 in FIG. 15. Details are not described again.

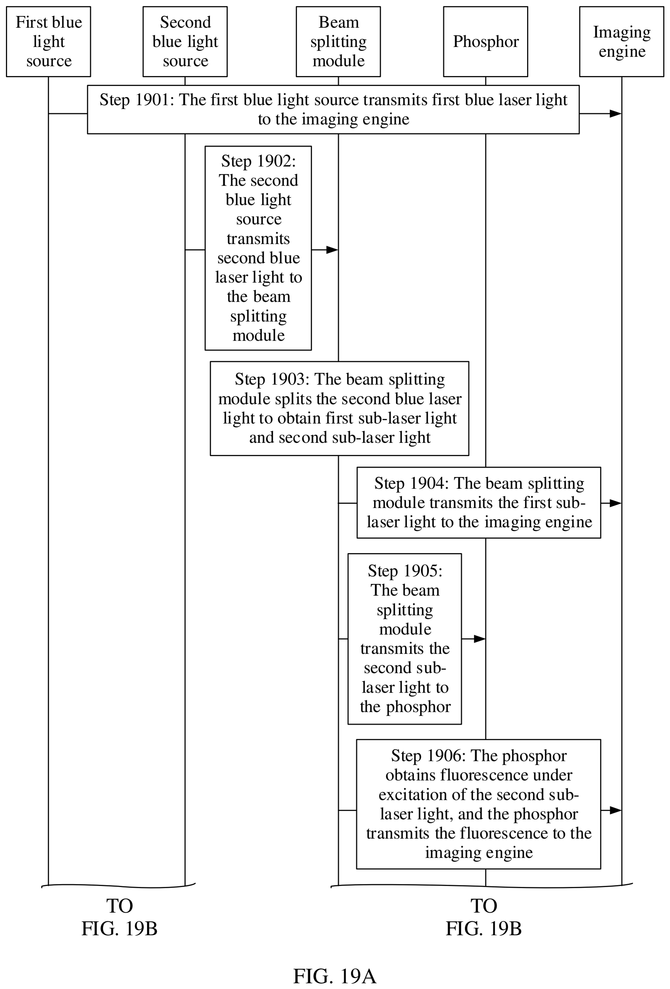

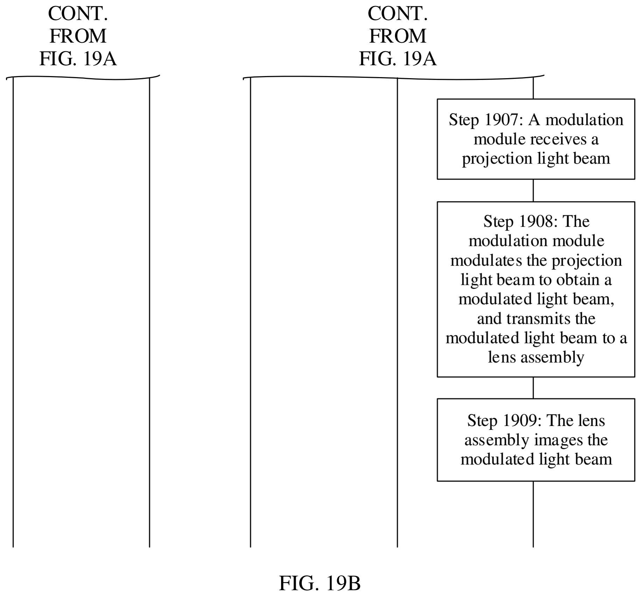

FIG. 19A and FIG. 19B are a step flowchart of a first embodiment of a projection method according to this application. The projection method in this embodiment is applied to a projection system. For a structure of the projection system, refer to any one of the embodiments shown in FIG. 9, FIG. 11, or FIG. 12. Details are not described again.

Step 1901: A first blue light source transmits first blue laser light to an imaging engine.

Step 1902: A second blue light source transmits second blue laser light to a beam splitting module.

Step 1903: The beam splitting module splits the second blue laser light to obtain first sub-laser light and second sub-laser light.

Step 1904: The beam splitting module transmits the first sub-laser light to the imaging engine.

Step 1905: The beam splitting module transmits the second sub-laser light to a phosphor.

Step 1906: The phosphor obtains fluorescence under excitation of the second sub-laser light, and the phosphor transmits the fluorescence to the imaging engine.

For a description of an execution process of step 1901 to step 1906 in this embodiment, refer to the description of corresponding step 1501 to step 1506 in FIG. 15. Details are not described again.

Step 1907: A modulation module receives a projection light beam.

Step 1908: The modulation module modulates the projection light beam to obtain a modulated light beam, and transmits the modulated light beam to a lens assembly.

Step 1909: The lens assembly images the modulated light beam.

For a description of an execution process of step 1907 to step 1909 in this embodiment, refer to any one of the embodiments shown in FIG. 9, FIG. 11, or FIG. 12. Details are not described again.

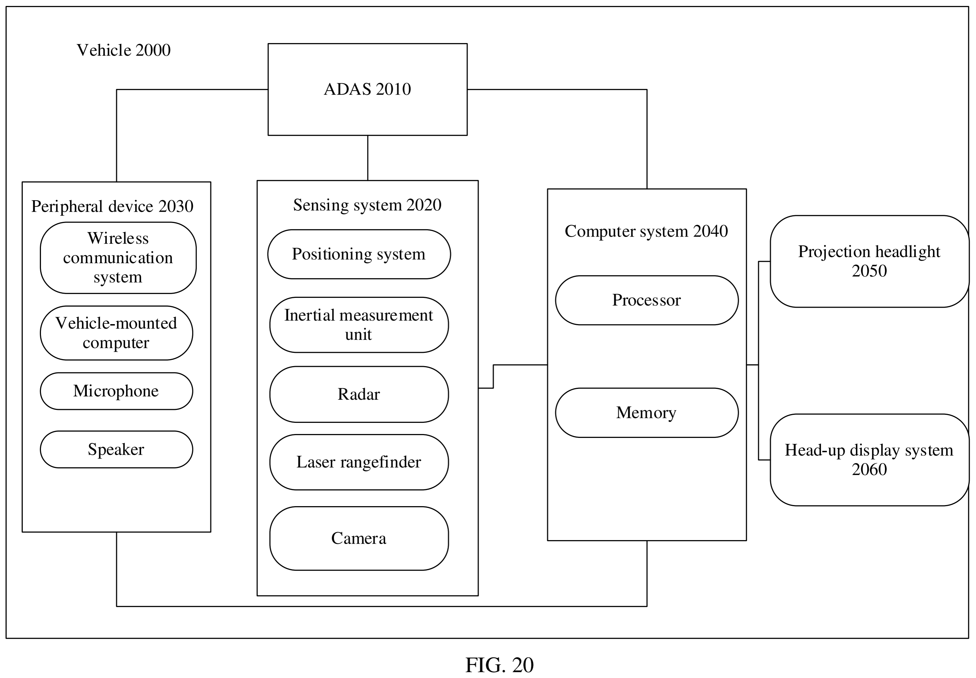

This application further provides a vehicle. FIG. 20 is a functional block diagram of an embodiment of a vehicle according to this application. In an embodiment, a vehicle 2000 is configured to be in a fully or partially autonomous driving mode. The vehicle in this embodiment includes a vehicle body. The vehicle body is configured to fasten a sensor system 2020, an advanced driving assistance system (advanced driving assistance system, ADAS) 2010, a peripheral device 2030, a computer system 2040, a projection headlight 2050, and a HUD system 2060.

The sensor system 2020 includes several sensors that sense and detect information about an ambient environment of the vehicle 2000. For example, the sensor system 2020 may include a positioning system (where the positioning system may be a global positioning system (global positioning system, GPS), or may be a BeiDou system or another positioning system), an inertial measurement unit (inertial measurement unit, IMU), a radar, a laser rangefinder, a camera, and the like. The sensor system 2020 may further include a sensor (for example, an in-vehicle air quality monitor, a fuel gauge, or an oil temperature gauge) of an internal system of the monitored vehicle 2000. Sensor data from one or more of these sensors may be used to detect an object and corresponding features (a position, a shape, a direction, a speed, and the like) of the object. Such detection and identification are key functions for a safe operation of the autonomous vehicle 2000. The positioning system may be configured to estimate a geographic position of the vehicle 2000. The IMU is configured to sense position and orientation changes of the vehicle 2000 based on an inertial acceleration. In an embodiment, the IMU may be a combination of an accelerometer and a gyroscope. The radar may sense an object in the ambient environment of the vehicle 2000 by using a radio signal. In some embodiments, in addition to sensing an object, the radar may be configured to sense a speed and/or a moving direction of the object. A specific type of the radar is not limited in embodiments. For example, the radar may be a millimeter-wave radar, a lidar, or the like. The laser rangefinder may sense, by using laser light, an object in an environment in which the vehicle 2000 is located. In some embodiments, the laser rangefinder may include one or more laser sources, a laser scanner, one or more detectors, and another system component. The camera may be configured to capture a plurality of images of the ambient environment of the vehicle 2000. The camera may be a static camera, a video camera, a monocular or binocular camera, or an infrared imager.

The ADAS 2010 senses the ambient environment, collects data, identifies, detects, and tracks static and dynamic objects, and performs system calculation and analysis based on navigation map data at any time during traveling of the vehicle, so that a driver can be aware of potential risks in advance, to effectively improve driving comfort and safety of the vehicle. For example, the ADAS 2010 may control the vehicle by using data obtained by the sensing system 2020. For another example, the ADAS 2010 may control the vehicle by using head unit data. The head unit data may be main data (fuel consumption, an engine speed, a temperature, and the like) on an instrument panel of the vehicle, vehicle speed information, steering wheel angle information, vehicle posture data, or the like.

The vehicle 2000 interacts with an external sensor, another vehicle, another computer system, or a user through the peripheral device 2030. The peripheral device 2030 may include a wireless communication system, a vehicle-mounted computer, a microphone, and/or a speaker. In some embodiments, the peripheral device 2030 provides a means for the user of the vehicle 2000 to interact with a user interface. For example, the vehicle-mounted computer may provide information for the user of the vehicle 2000. The user interface may further operate the vehicle-mounted computer to receive an input from the user. The vehicle-mounted computer may be operated through a touchscreen. In another case, the peripheral device 2030 may provide a means for the vehicle 2000 to communicate with another device in the vehicle. For example, the microphone may receive an audio (for example, a voice command or another audio input) from the user of the vehicle 2000. Similarly, the speaker may output an audio to the user of the vehicle 2000. The wireless communication system may wirelessly communicate with one or more devices directly or over a communication network.

A part of or all functions of the vehicle 2000 are controlled by the computer system 2040. The computer system 2040 may control functions of the vehicle 2000 based on inputs received from various systems (for example, the sensing system 2020, the ADAS 2010, and the peripheral device 2030) and the user interface. The computer system 2040 may include at least one processor. The processor executes instructions stored in a non-transitory computer-readable medium like a memory. The computer system 2040 may alternatively be a plurality of computing devices that control individual components or subsystems of the vehicle 2000 in a distributed manner. A type of the processor is not limited in embodiments. For a description of the type of the processor, refer to the foregoing description of the controller included in the light source. Details are not described again.

The processor can obtain vehicle driving-related information from the peripheral device 2030, the sensing system 2020, and/or the ADAS 2010, and send the vehicle driving-related information to the projection headlight 2050. For a description of the projection headlight 2050, refer to FIG. 14. Details are not described again. The processor sends the vehicle driving-related information to the HUD system 2060. For a description of the HUD system 2060, refer to FIG. 13. Details are not described again.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to a part of technical features thereof, without departing from the spirit and scope of the technical solutions of embodiments of this application.

**Claims**

1. A light source, comprising a first blue light source, a second blue light source, a beam splitting module, and a phosphor, wherein

    the first blue light source is configured to output first blue laser light;
    the second blue light source is configured to transmit second blue laser light to the beam splitting module, wherein a wavelength of the first blue laser light is different from a wavelength of the second blue laser light, and a polarization of the first blue laser light is different from a polarization of the second blue laser light;
    the beam splitting module is configured to: split the second blue laser light to obtain first sub-laser light and second sub-laser light, and output the first sub-laser light and transmit the second sub-laser light to the phosphor; and
    the phosphor is configured to: obtain fluorescence under excitation of the second sub-laser light, and output the fluorescence; and the light source is configured to output a projection light beam, wherein the projection light beam comprises the first blue laser light, the first sub-laser light, and the fluorescence.

2. The light source according to claim 1, wherein the light source further comprises a controller, the controller is separately connected to the first blue light source and the second blue light source, and the controller is configured to transmit a first light emitting signal to the first blue light source and a second light emitting signal to the second blue light source; and the first light emitting signal and the second light emitting signal are jointly used to adjust a value relationship between an optical power of the first blue laser light and an optical power of the second blue laser light, and the value relationship between the optical power of the first blue laser light and the optical power of the second blue laser light is related to chromaticity coordinates of the projection light beam.

3. The light source according to claim 2, wherein the controller is configured to: receive an adjustment instruction, and transmit the first light emitting signal to the first blue light source and the second light emitting signal to the second blue light source according to the adjustment instruction.

4. The light source according to any one of claims 1 to 3, wherein the polarization of the first blue laser light is perpendicular to the polarization of the second blue laser light.

5. The light source according to any one of claims 1 to 4, wherein the light source further comprises a polarizing beam combiner module, and in a process in which the first blue light source is configured to output the first blue laser light and the beam splitting module is configured to output the first sub-laser light, the first blue light source is configured to transmit the first blue laser light to the polarizing beam combiner module, and the beam splitting module is configured to transmit the first sub-laser light to the polarizing beam combiner module; and
the polarizing beam combiner module is configured to output the first blue laser light and the first sub-laser light respectively based on the polarization of the first blue laser light and a polarization of the first sub-laser light.

6. The light source according to claim 5, wherein the polarizing beam combiner module is configured to transparently transmit and output the first blue laser light based on the polarization of the first blue laser light, and the polarizing beam combiner module is configured to reflect and output the first sub-laser light based on the polarization of the first sub-laser light; or
the polarizing beam combiner module is configured to reflect and output the first blue laser light based on the polarization of the first blue laser light, and the polarizing beam combiner module is configured to transparently transmit and output the first sub-laser light based on the polarization of the first sub-laser light.

7. The light source according to any one of claims 1 to 6, wherein the light source further comprises a red light source, the red light source is configured to output red laser light, and the projection light beam further comprises the red laser light.

8. The light source according to any one of claims 1 to 6, wherein the light source further comprises a red light source and a green light source, the red light source is configured to output red laser light, the green light source is configured to output green laser light, and the projection light beam further comprises the green laser light and the red laser light.

9. The light source according to any one of claims 1 to 8, wherein the light source further comprises a beam combiner module, and the beam combiner module is configured to combine the first blue laser light, the first sub-laser light, and the fluorescence to obtain the projection light beam.

10. The light source according to any one of claims 1 to 8, wherein the light source further comprises a color filter wheel, the color filter wheel is configured to filter a blue projection light beam, a red projection light beam, and a green projection light beam out from the projection light beam in different time periods, and the blue projection light beam comprises the first blue laser light and the first sub-laser light.

11. A projection system, wherein the projection system comprises a light source and an imaging engine, the imaging engine comprises a modulation module and a lens assembly, and the light source is as described in any one of claims 1 to 10;

    the modulation module is configured to receive the projection light beam from the light source;
    the modulation module is configured to: modulate the projection light beam to obtain a modulated light beam, and transmit the modulated light beam to the lens assembly; and
    the lens assembly is configured to image the modulated light beam.

12. The projection system according to claim 11, wherein the imaging engine further comprises a color filter module and a convergence module, the modulation module comprises a blue image modulation module, a red image modulation module, and a green image modulation module, and the color filter module is configured to:

    split the projection light beam to obtain a blue projection light beam, a red projection light beam, and a green projection light beam;
    transmit the blue projection light beam to the blue image modulation module;
    transmit the red projection light beam to the red image modulation module; and
    transmit the green projection light beam to the green image modulation module;
    the blue image modulation module is configured to modulate the blue projection light beam to obtain a modulated blue light beam, the red image modulation module is configured to modulate the red projection light beam to obtain a modulated red light beam, and the green image modulation module is configured to modulate the green projection light beam to obtain a modulated green light beam; and
    the convergence module is configured to: converge the modulated blue light beam, the modulated red light beam, and the modulated green light beam to obtain the modulated light beam, and transmit the modulated light beam to the lens assembly.

13. The projection system according to claim 11, wherein the imaging engine further comprises a color filter wheel, and the color filter wheel is configured to:

    split the projection light beam in a first time period to obtain a blue projection light beam, and transmit the blue projection light beam to the modulation module;
    split the projection light beam in a second time period to obtain a red projection light beam, and transmit the red projection light beam to the modulation module; and
    split the projection light beam in a third time period to obtain a green projection light beam, and transmit the green projection light beam to the modulation module, wherein any two of the first time period, the second time period, and the third time period are different.

14. A projection method, wherein the method is applied to a projection system, the projection system comprises a light source and an imaging engine, the light source comprises a first blue light source, a second blue light source, a beam splitting module, and a phosphor, the imaging engine comprises a modulation module and a lens assembly, and the method comprises:

    transmitting, by the first blue light source, first blue laser light to the modulation module;
    transmitting, by the second blue light source, second blue laser light to the beam splitting module, wherein a wavelength of the first blue laser light is different from a wavelength of the second blue laser light, and a polarization of the first blue laser light is different from a polarization of the second blue laser light;
    splitting, by the beam splitting module, the second blue laser light to obtain first sub-laser light and second sub-laser light, and transmitting the first sub-laser light to the modulation module and the second sub-laser light to the phosphor;
    transmitting, by the phosphor, fluorescence to the modulation module, wherein the fluorescence is obtained when the phosphor is excited by the second sub-laser light;
    modulating, by the modulation module, a projection light beam to obtain a modulated light beam, and transmitting the modulated light beam to the lens assembly, wherein the projection light beam comprises the first blue laser light, the first sub-laser light, and the fluorescence; and

imaging, by the lens assembly, the modulated light beam.

15. The projection method according to claim 14, wherein the light source further comprises a controller, and before transmitting, by the first blue light source, the first blue laser light to the modulation module and transmitting, by the second blue light source, the second blue laser light to the beam splitting module, the method further comprises:

transmitting, by the controller, a first light emitting signal to the first blue light source and a second light emitting signal to the second blue light source, wherein
the first light emitting signal and the second light emitting signal are jointly used to adjust a value relationship between an optical power of the first blue laser light and an optical power of the second blue laser light, and the value relationship between the optical power of the first blue laser light and the optical power of the second blue laser light is related to chromaticity coordinates of the projection light beam.

16. The projection method according to claim 14 or 15, wherein the light source further comprises a polarizing beam combiner module, and transmitting, by the first blue light source, the first blue laser light to the modulation module and transmitting, by the beam splitting module, the first sub-laser light to the modulation module comprises:

transmitting, by the first blue light source, the first blue laser light to the polarizing beam combiner module;
transmitting, by the beam splitting module, the first sub-laser light to the polarizing beam combiner module; and
separately transmitting, by the polarizing beam combiner module, the first blue laser light and the first sub-laser light to the modulation module based on the polarization of the first blue laser light and a polarization of the first sub-laser light.

17. A head-up display system, comprising a light deflection module and the projection system according to any one of claims 11 to 13, wherein

the projection system is configured to transmit the modulated light beam to the light deflection module; and
the light deflection module is configured to transmit the amplified modulated light beam to a windshield, and the modulated light beam forms a virtual image through the windshield.

18. A projection headlight, comprising an imaging engine and the light source according to any one of claims 1 to 10, wherein

the light source is configured to transmit the projection light beam to the imaging engine; and
the imaging engine is configured to modulate the projection light beam to obtain a modulated light beam, the modulated light beam is irradiated on a road surface to form a target light pattern, and the target light pattern indicates vehicle driving-related information.

19. A vehicle, comprising a vehicle body, a windshield, and a processor, wherein the vehicle body is configured to fasten the windshield and the processor, and the vehicle further comprises the head-up display system according to claim 17 or the projection headlight according to claim 18;

the processor is configured to transmit vehicle driving-related information to the imaging engine; and
the imaging engine is configured to modulate the vehicle driving-related information to the projection light beam to obtain the modulated light beam.

20. Augmented reality AR glasses, wherein the AR glasses comprise a frame, lenses, a modulation module, and the light source according to any one of claims 1 to 10, and the frame is configured to fasten the lenses, the light source, and the modulation module;

the light source is configured to transmit the projection light beam to the modulation module;
the modulation module is configured to: modulate the projection light beam to obtain a modulated light beam, and transmit the modulated light beam to the lenses; and
the lenses are configured to project the modulated light beam.

FIG. 1

FIG. 2

FIG. 3

FIG. 4

FIG. 5

FIG. 6

FIG. 7

FIG. 8

FIG. 9

FIG. 10

FIG. 11

1205

1202

Lens
assembly
1203

1206

1204

1211

Light
source
1201

FIG. 12

1312

1304

1303

1311

Imaging
engine 1302

Light source
1301

FIG. 13

Road surface projection region

FIG. 14

| First blue light source | Second blue light source | Beam splitting module | Phosphor | Imaging engine |
|---|---|---|---|---|

Step 1501: The first blue light source transmits first blue laser light to the imaging engine

Step 1502: The second blue light source transmits second blue laser light to the beam splitting module

Step 1503: The beam splitting module splits the second blue laser light to obtain first sub-laser light and second sub-laser light

Step 1504: The beam splitting module transmits the first sub-laser light to the imaging engine

Step 1505: The beam splitting module transmits the second sub-laser light to the phosphor

Step 1506: The phosphor obtains fluorescence under excitation of the second sub-laser light, and the phosphor transmits the fluorescence to the imaging engine

FIG. 15

| Controller | First blue light source | Second blue light source | Beam splitting module | Phosphor | Imaging engine |
|---|---|---|---|---|---|

Step 1601: The controller transmits a first light emitting signal to the first blue light source

Step 1602: The controller transmits a second light emitting signal to the second blue light source

Step 1603: The first blue light source transmits first blue laser light to the imaging engine

Step 1604: The second blue light source transmits second blue laser light to the beam splitting module

Step 1605: The beam splitting module splits the second blue laser light to obtain first sub-laser light and second sub-laser light

TO
FIG. 16B

TO
FIG. 16B

TO
FIG. 16B

FIG. 16A

CONT.
FROM
FIG. 16A

CONT.
FROM
FIG. 16A

CONT.
FROM
FIG. 16A

Step 1606: The beam splitting module transmits the first sub-laser light to the imaging engine

Step 1607: The beam splitting module transmits the second sub-laser light to the phosphor

Step 1608: The phosphor obtains fluorescence under excitation of the second sub-laser light, and the phosphor transmits the fluorescence to the imaging engine

FIG. 16B

| Red light source | First blue light source | Second blue light source | Beam splitting module | Phosphor | Imaging engine |
|---|---|---|---|---|---|

Step 1701: The first blue light source transmits first blue laser light to the imaging engine

Step 1702: The second blue light source transmits second blue laser light to the beam splitting module

Step 1703: The red light source transmits red laser light to the imaging engine

Step 1704: The beam splitting module splits the second blue laser light to obtain first sub-laser light and second sub-laser light

Step 1705: The beam splitting module transmits the first sub-laser light to the imaging engine

Step 1706: The beam splitting module transmits the second sub-laser light to the phosphor

Step 1707: The phosphor obtains fluorescence under excitation of the second sub-laser light, and the phosphor transmits the fluorescence to the imaging engine

FIG. 17

| Tri-color laser | Second blue light source | Beam splitting module | Phosphor | Imaging engine |
|---|---|---|---|---|

Step 1801: The tri-color laser transmits first blue laser light, red laser light, and green laser light to the imaging engine

Step 1802: The second blue light source transmits second blue laser light to the beam splitting module

Step 1803: The beam splitting module splits the second blue laser light to obtain first sub-laser light and second sub-laser light

Step 1804: The beam splitting module transmits the first sub-laser light to the imaging engine

Step 1805: The beam splitting module transmits the second sub-laser light to the phosphor

Step 1806: The phosphor obtains fluorescence under excitation of the second sub-laser light, and the phosphor transmits the fluorescence to the imaging engine

FIG. 18

| First blue light source | Second blue light source | Beam splitting module | Phosphor | Imaging engine |
|---|---|---|---|---|

Step 1901: The first blue light source transmits first blue laser light to the imaging engine

Step 1902: The second blue light source transmits second blue laser light to the beam splitting module

Step 1903: The beam splitting module splits the second blue laser light to obtain first sub-laser light and second sub-laser light

Step 1904: The beam splitting module transmits the first sub-laser light to the imaging engine

Step 1905: The beam splitting module transmits the second sub-laser light to the phosphor

Step 1906: The phosphor obtains fluorescence under excitation of the second sub-laser light, and the phosphor transmits the fluorescence to the imaging engine

TO
FIG. 19B

TO
FIG. 19B

FIG. 19A

CONT.
FROM
FIG. 19A

CONT.
FROM
FIG. 19A

Step 1907: A modulation module receives a projection light beam

Step 1908: The modulation module modulates the projection light beam to obtain a modulated light beam, and transmits the modulated light beam to a lens assembly

Step 1909: The lens assembly images the modulated light beam

FIG. 19B

Vehicle 2000

ADAS 2010

**Peripheral device 2030**

- Wireless communication system
- Vehicle-mounted computer
- Microphone
- Speaker

**Sensing system 2020**

- Positioning system
- Inertial measurement unit
- Radar
- Laser rangefinder
- Camera

**Computer system 2040**

- Processor
- Memory

Projection headlight 2050

Head-up display system 2060

FIG. 20

## INTERNATIONAL SEARCH REPORT

| International application No. |
| --- |
| **PCT/CN2024/081141** |

**A.    CLASSIFICATION OF SUBJECT MATTER**

G03B21/20(2006.01)i;  G03B21/00(2006.01)i

According to International Patent Classification (IPC) or to both national classification and IPC

**B.    FIELDS SEARCHED**

Minimum documentation searched (classification system followed by classification symbols)

IPC:  G03B

Documentation searched other than minimum documentation to the extent that such documents are included in the fields searched

Electronic data base consulted during the international search (name of data base and, where practicable, search terms used)

CNTXT, WPABSC, ENTXTC, VEN, ENTXT, CJFD, 读秀, DUXIU: 光源, 第一蓝色激光, 第二蓝色激光, 第一, 第二, 蓝色, 激光, 偏振, 波长, 散斑, 分光, 投影, 投影车灯, 抬头显示, AR眼镜, 增强现实眼镜, hud, light, optic+, blue, laser, first, second, polarization, wavelength, speckle, split+, project+, vehicle 1w light?, head 1w up 1w display, AR, eyeglass+

**C.    DOCUMENTS CONSIDERED TO BE RELEVANT**

| Category* | Citation of document, with indication, where appropriate, of the relevant passages | Relevant to claim No. |
| --- | --- | --- |
| X | CN 109407450 A (HISENSE GROUP CO., LTD.) 01 March 2019 (2019-03-01) description, paragraphs 23-59, and figures 1-5 | 1-16 |
| Y | CN 109407450 A (HISENSE GROUP CO., LTD.) 01 March 2019 (2019-03-01) description, paragraphs 23-59, and figures 1-5 | 17-20 |
| Y | CN 111665621 A (RICOH CO., LTD.) 15 September 2020 (2020-09-15) description, paragraphs 29-116, and figures 1-20 | 17, 19 |
| Y | CN 112147838 A (QINGDAO HISENSE LASER DISPLAY CO., LTD.) 29 December 2020 (2020-12-29) description, paragraphs 47-74, and figures 1-12 | 18-20 |
| A | CN 108303839 A (IVIEW DISPLAYS (SHENZHEN) CO., LTD.) 20 July 2018 (2018-07-20) entire document | 1-20 |
| A | CN 106597785 A (HISENSE GROUP CO., LTD.) 26 April 2017 (2017-04-26) entire document | 1-20 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 July 2024** | **01 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**EP 4 707 918 A1**

## INTERNATIONAL SEARCH REPORT

International application No.

**PCT/CN2024/081141**

### C. DOCUMENTS CONSIDERED TO BE RELEVANT

| Category* | Citation of document, with indication, where appropriate, of the relevant passages | Relevant to claim No. |
|---|---|---|
| A | CN 112099296 A (QINGDAO HISENSE LASER DISPLAY CO., LTD.) 18 December 2020 (2020-12-18)<br>entire document | 1-20 |
| A | US 2018080630 A1 (APPOTRONICS CORP., LTD.) 22 March 2018 (2018-03-22)<br>entire document | 1-20 |

Form PCT/ISA/210 (second sheet) (July 2022)

**INTERNATIONAL SEARCH REPORT**
Information on patent family members

International application No.

**PCT/CN2024/081141**

| Patent document cited in search report | | | Publication date (day/month/year) | Patent family member(s) | | | Publication date (day/month/year) |
|---|---|---|---|---|---|---|---|
| CN | 109407450 | A | 01 March 2019 | US | 10139716 | B1 | 27 November 2018 |
| | | | | EP | 3444668 | A1 | 20 February 2019 |
| | | | | WO | 2019033672 | A1 | 21 February 2019 |
| | | | | CN | 109407451 | A | 01 March 2019 |
| | | | | CN | 109407450 | B | 09 October 2020 |
| | | | | CN | 109407451 | B | 09 October 2020 |
| | | | | CN | 112099295 | A | 18 December 2020 |
| | | | | CN | 112099296 | A | 18 December 2020 |
| | | | | CN | 112147837 | A | 29 December 2020 |
| | | | | CN | 112147838 | A | 29 December 2020 |
| | | | | EP | 3444668 | B1 | 12 May 2021 |
| | | | | CN | 112099295 | B | 05 November 2021 |
| | | | | CN | 112099296 | B | 05 November 2021 |
| | | | | CN | 112147837 | B | 05 November 2021 |
| | | | | CN | 112147838 | B | 05 November 2021 |
| CN | 111665621 | A | 15 September 2020 | JP | 2020144326 | A | 10 September 2020 |
| | | | | EP | 3705927 | A1 | 09 September 2020 |
| | | | | US | 2020285048 | A1 | 10 September 2020 |
| CN | 112147838 | A | 29 December 2020 | None | | | |
| CN | 108303839 | A | 20 July 2018 | WO | 2019153990 | A1 | 15 August 2019 |
| CN | 106597785 | A | 26 April 2017 | None | | | |
| CN | 112099296 | A | 18 December 2020 | None | | | |
| US | 2018080630 | A1 | 22 March 2018 | EP | 3282317 | A1 | 14 February 2018 |
| | | | | EP | 3282317 | A4 | 25 April 2018 |
| | | | | EP | 3282317 | B1 | 04 August 2021 |
| | | | | US | 10184641 | B2 | 22 January 2019 |
| | | | | WO | 2016165569 | A1 | 20 October 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310647208